(19) Europäisches Patentamt / European Patent Office / Office européen des brevets

(11) **EP 4 383 778 A1**

(12) **EUROPEAN PATENT APPLICATION**
published in accordance with Art. 153(4) EPC

(43) Date of publication:
**12.06.2024 Bulletin 2024/24**

(21) Application number: **22852529.1**

(22) Date of filing: **31.01.2022**

(51) International Patent Classification (IPC):
**H04W 16/14** (2009.01)     **H04W 72/04** (2023.01)
**H04W 72/56** (2023.01)

(52) Cooperative Patent Classification (CPC):
**H04W 16/14; H04W 72/04**

(86) International application number:
**PCT/JP2022/003525**

(87) International publication number:
**WO 2023/013100 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021 JP 2021128798**

(71) Applicant: **Sony Group Corporation**
**Tokyo**
**108-0075 (JP)**

(72) Inventors:
• **USUI, Takashi**
**Tokyo 108-0075 (JP)**
• **FURUICHI, Sho**
**Tokyo 108-0075 (JP)**

(74) Representative: **Witte, Weller & Partner**
**Patentanwälte mbB**
**Postfach 10 54 62**
**70047 Stuttgart (DE)**

(54) **INFORMATION PROCESSING DEVICE, COMMUNICATION SYSTEM, INFORMATION PROCESSING METHOD, AND PROGRAM**

(57) Convenience is improved in a communication system that uses dynamic frequency sharing.

A communication unit performs communication with a first base station of which a grant is registered in a list of grants for which radio wave transmission needs to be stopped in a case where a wireless communication device exists in a predetermined area and a second base station of which a grant is not registered in the list. When information regarding the existence of the wireless communication device in the predetermined area is acquired, the control unit determines whether or not to change a frequency channel of the second base station from a first frequency channel to a second frequency channel.

*FIG. 7*

EP 4 383 778 A1

**Description**

TECHNICAL FIELD

The present technology relates to an information processing device. Specifically, the present technology relates to an information processing device, a communication system, and an information processing method which are configured to perform wireless communication, and a program that causes a computer to execute the method.

BACKGROUND ART

Hitherto, due to increase in a wireless environment in which various wireless systems are mixed and an enrichment of content provided wirelessly, a problem of exhaustion of radio resources (spectra or frequencies) that can be allocated to the wireless systems has emerged. Accordingly, as means for extracting necessary radio resources, "dynamic spectrum access (DSA)" using temporal and spatial vacancies (white spaces) in a frequency band allocated to a specific wireless system has rapidly attracted attention (for example, see Non-Patent Document 1).

CITATION LIST

NON-PATENT DOCUMENT

Non-Patent Document 1: "WINNF-TS-0112", [online], 2020, The Software Defined Radio Forum Inc., [searched on February 30, 2021], Internet <URL:https://winnf.memberclicks.net/assets/CBRS/WINNF-TS-0112.pdf>

SUMMARY OF THE INVENTION

PROBLEMS TO BE SOLVED BY THE INVENTION

In the above-described related art, the exhaustion of the radio resources is resolved by the DSA. However, in a case where the DSA is used, there is a possibility that convenience of a communication system is deteriorated. For example, when a wireless communication device of an existing user primarily uses a frequency channel, a base station that secondarily uses the frequency channel sometimes needs to change the frequency channel to another frequency channel. When the frequency channel is changed, there is a possibility that wireless communication of the base station is interrupted at an unexpected timing, or communication quality is deteriorated after the change. As a result, there is a problem that the convenience of the communication system is impaired.

The present technology has been made in view of such a situation, and an object thereof is to improve convenience in a communication system that uses dynamic spectrum access.

SOLUTIONS TO PROBLEMS

The present technology has been made to solve the above-described problem, and a first aspect thereof provides an information processing device, an information processing method thereof, and a program for causing a computer to execute the method, the information processing device including: a communication unit that performs communication with a first base station of which a grant is registered in a list of grants for which radio wave transmission needs to be stopped in a case where a wireless communication device exists in a predetermined area and a second base station of which a grant is not registered in the list; and a control unit that determines whether or not to change a frequency channel of the second base station from a first frequency channel to a second frequency channel when information regarding the existence of the wireless communication device in the predetermined area is acquired. This brings about an effect that convenience of a communication system in which the information processing device is disposed is improved.

Furthermore, in the first aspect, the information processing device may be a device that relays communication between a spectrum access system (SAS) and the first and second base stations. This may bring about an effect that it is not necessary for the SAS to determine whether or not to change the frequency channel. Furthermore, the information processing device may hold a list of base stations whose frequencies need to be shifted in response to a change in a frequency of the first base station.

Furthermore, in the first aspect, in a case where the radio wave is detected, the control unit may determine whether or not to change the frequency channel of the second base station when the SAS requests the second base station to change the frequency channel. This brings about an effect that whether or not to change the frequency channel is determined when the change of the frequency channel is requested.

Furthermore, in the first aspect, in a case of determining to change the frequency channel, the information processing device may notify the SAS that the frequency channel is to be changed and change the frequency channel of the second base station at a predetermined timing. This brings about an effect that the frequency channel is changed at an appropriate timing.

The control unit may determine whether or not to change the frequency channel of the second base station when the SAS requests the first base station to stop the radio wave transmission. This brings about an effect that the frequency channel is changed at an appropriate timing.

Furthermore, in the first aspect, the information processing device may be a device having a function of a spectrum access system (SAS). This brings about an effect that there is no need for an intermediate entity to notify the SAS that the frequency channel is to be changed.

Furthermore, in the first aspect, a storage unit that stores grant information of each of the first and second base stations may be further provided, and the control unit may temporarily invalidate the grant information in a case where the frequency channel is to be changed. This brings about an effect that reacquisition of the grant information becomes easy.

Furthermore, in the first aspect, the control unit may further determine whether or not to change a frequency channel of the first base station to a frequency channel allocated to a general authorized access tier. This brings about an effect that the frequency channel is changed to the frequency channel allocated to the general authorized access tier

Furthermore, in the first aspect, the information processing device may change a frequency channel of the first base station and the frequency channel of the second base station at the same timing in a case of determining to change the frequency channels. This brings about an effect that the first base station is not isolated.

Furthermore, in the first aspect, the information processing device may change a frequency channel of the first base station and the frequency channel of the second base station at different timings in a case of determining to change the frequency channels. This brings about an effect that the frequency channel of the first base station is changed without waiting for the change of the frequency channel of the second base station.

Furthermore, in the first aspect, the control unit may change the frequency channel of the second base station in a case where a difference between maximum transmission power allowed for the second base station in the first frequency channel and maximum transmission power allowed for the second base station in the second frequency channel does not exceed a predetermined allowed value. This brings about an effect of suppressing reduction in the maximum transmission power due to the change of the frequency channel.

Furthermore, in the first aspect, the control unit may change the frequency channel of the second base station when a remaining time until next coordinated periodic activities among SAS's (CPAS) becomes shorter than a predetermined time in a case where the difference exceeds the allowed value. This brings an effect that the frequency channel is changed before the next CPAS.

Furthermore, in the first aspect, the control unit may determine whether or not to change the frequency channel of the second base station on the basis of maximum transmission power allowed for the second base station in the first frequency channel, transmission power allowed for the second base station within a predetermined margin in the second frequency channel, and transmission power allowed for the second base station in next coordinated periodic activities among SAS's (CPAS) in the second frequency channel. This brings about an effect of suppressing reduction in the maximum transmission power due to the change of the frequency channel.

The first frequency channel may be a frequency channel allocated to a priority access tier, and the second frequency channel may be a frequency channel allocated to a general authorized access tier. This brings about an effect that the frequency channel allocated to the priority access tier is changed to the frequency channel allocated to the general authorized access tier.

Furthermore, a second aspect of the present technology is an information processing device including: a communication unit that performs communication with a first base station of which a grant is registered in a list of grants for which radio wave transmission needs to be stopped in a case where a wireless communication device exists in a predetermined area; and a control unit that controls transmission power of the base station to a value that is not registered in the list when information regarding the existence of the wireless communication device in the predetermined area is acquired. This may bring about an effect that the radio wave transmission is not interrupted.

Furthermore, a third aspect of the present technology is an information processing device including a communication unit that performs communication with a first information processing device, in which the first information processing device performs communication with a first base station of which a grant is registered in a list of grants for which radio wave transmission needs to be stopped in a case where a wireless communication device exists in a predetermined area and a second base station of which a grant is not registered in the list, and determines whether or not to change a frequency channel of the second base station from a first frequency channel to a second frequency channel on a basis of information indicating that the wireless communication device exists in the predetermined area, and the communication unit acquires determined information regarding the frequency channel of the second base station from the first information processing device. This brings about an effect that convenience of a communication system in which the information processing device is disposed is improved.

Furthermore, a fourth aspect of the present technology is a communication system including: a first base station of which a grant is registered in a list of grants for which radio wave transmission needs to be stopped in a case where a wireless communication device exists in a predetermined area; a second base station of which a grant is not registered in the list; a communication unit that performs communication with the first base station and the second base station; an acquisition unit that acquires information regarding the existence of the wireless communication device in the predetermined area; and a control unit that determines whether or not to change a frequency channel of the second base station from a first frequency channel to a second frequency channel on a basis of the information. This brings about an effect of improving convenience of the communication system.

BRIEF DESCRIPTION OF DRAWINGS

Fig. 1 is a diagram illustrating an example of a system model according to an embodiment of the present technology.
Fig. 2 is a diagram illustrating an example of a system that performs independent decision-making according to the embodiment of the present technology.
Fig. 3 is a diagram illustrating an example of a system that performs centralized decision-making according to the embodiment of the present technology.
Fig. 4 is a diagram illustrating an example of a system to which both the centralized decision-making and distributed decision-making are applied according to the embodiment of the present technology.
Fig. 5 is an example of classification of users sharing a spectrum according to the embodiment of the present technology.
Fig. 6 is a view illustrating a transmission bandwidth specification of evolved universal terrestrial radio access (E-UTRA) described in TS36.104 of 3rd Generation Partnership Project (3GPP) according to the embodiment of the present technology.
Fig. 7 is a diagram illustrating an example of a communication system according to a first example of the embodiment of the present technology.
Fig. 8 is a block diagram illustrating a configuration example of a communication control device and an intermediate entity in the first example of the embodiment of the present technology.
Fig. 9 is a sequence diagram illustrating an example of a frequency channel change process according to a comparative example.
Fig. 10 is a sequence diagram illustrating an example of a frequency channel change process according to the first example of the embodiment of the present technology.
Fig. 11 is a diagram for describing an allowed interfering amount according to the embodiment of the present technology.
Fig. 12 is a sequence diagram illustrating an example of a frequency channel change process according to a second example of the embodiment of the present technology.
Fig. 13 is a sequence diagram illustrating an example of a frequency channel change process according to a modification example of the second example of the embodiment of the present technology.
Fig. 14 is a sequence diagram illustrating an example of a frequency channel change process according to a third example of the embodiment of the present technology.

MODE FOR CARRYING OUT THE INVENTION

Hereinafter, modes for carrying out the present technology (hereinafter referred to as embodiments) will be described. The description will be given in the following order.

1. Assumed Representative Scenario
2. Description of Various Procedures Assumed in Present Embodiment
3. Examples of Present Invention

<<1. Assumed Representative Scenario>>

<1.1 System Model>

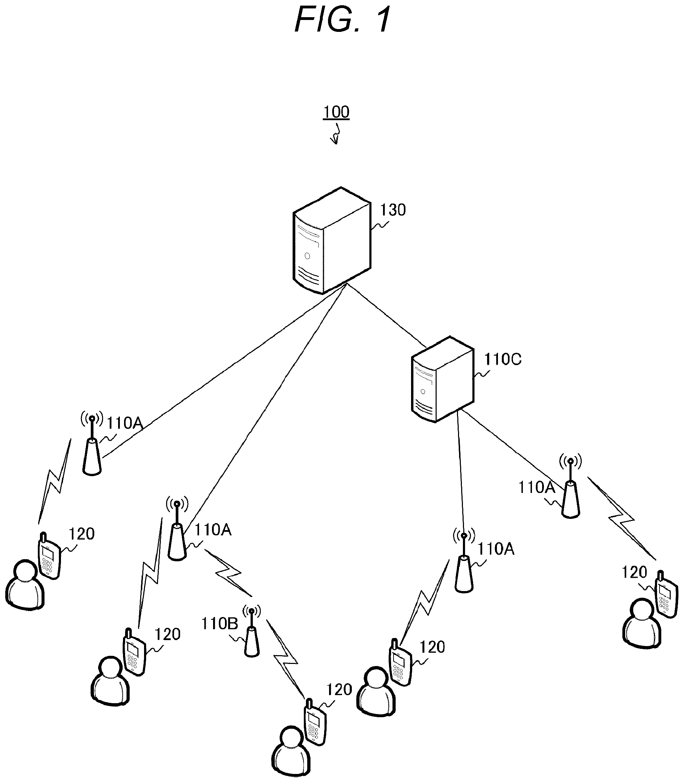

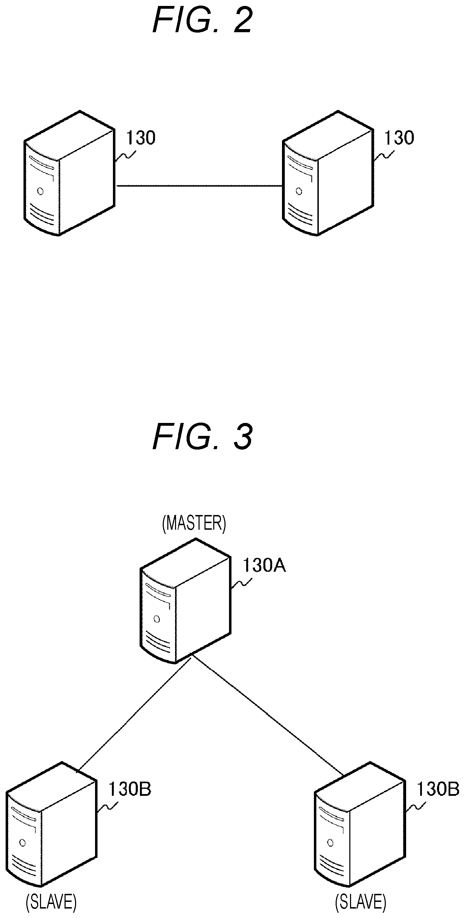

Fig. 1 illustrates a system model in an embodiment of the present invention. As illustrated in Fig. 2, this system model is represented by a communication network 100 including wireless communication, and typically includes the following entities.

- Communication device 110
- Terminal 120
- Communication control device 130

Furthermore, this system model includes at least a primary system and a secondary system using the communication network 100. The primary system and the secondary system are configured by the communication device 110 or a communication device 110 and a terminal 120. Various communication systems can be handled as the primary system or the secondary system, but in the present embodiment, it is assumed that the primary system and the secondary system use some or all of a frequency band. Note that the respective frequency bands allocated to the primary system and the secondary system partially or entirely overlap in some cases or do not overlap at all in other cases. That is, this system model will be described as a model of a wireless communication system related to dynamic spectrum access (DSA). Note that this system model is not limited to systems related to the dynamic spectrum access.

Typically, the communication device 110 is a wireless device that provides a wireless communication service to the terminal 120, such as a wireless base station (Base Station, Node B, eNB, gNB, or the like) or a wireless access point. That is, the communication device 110 provides the wireless communication service to enable wireless communication of the terminal 120. Furthermore, the communication device 110 may be a wireless relay device or an optical extension device called a remote radio head (RRH). In the following description, unless otherwise noted, the communication device 110 will be described as an entity constituting the secondary system.

The coverage (communication region) provided by the communication device 110 is allowed to have various sizes from a large size such as a macro cell to a small size such as a pico cell. Like a distributed antenna system (DAS), a plurality of the communication devices 110 may form one cell. Furthermore, in a case where the communication device 110 has a capability of beamforming, a cell or a service area may be formed for each beam.

In the present disclosure, it is assumed that there are two different types of communication devices 110.

In the present disclosure, the communication device 110 that can access the communication control device 130 without using a wireless path that requires permission of the communication control device 130 is referred to as a "communication device 110A". Specifically, for example, the communication device 110 capable of a wired Internet connection can be regarded as the "communication device 110A". Furthermore, for example, even in a wireless relay device that does not have a wired Internet connection function, if a wireless backhaul link using a spectrum that does not require permission of the communication control device 130 is constructed with another communication device 110A, such a wireless relay device may also be regarded as the "communication device 110A".

In the present disclosure, the communication device 110 that cannot access the communication control device 130 without a wireless path that requires permission of the communication control device 130 is referred to as a "communication device 110B". For example, a wireless relay device that needs to construct a backhaul link using a spectrum that requires permission of the communication control device 130 can be regarded as the "communication device 110B". Furthermore, for example, a device such as a smartphone having a wireless network provision function represented by tethering and using a spectrum that requires permission of the communication control device 130 in both the backhaul link and the access link may be handled as the "communication device 110B".

The communication device 110 is not necessarily fixedly installed. For example, the communication device 110 may be installed in a mobile object such as an automobile. Furthermore, the communication device 110 does not necessarily need to exist on the ground. For example, the communication device 110 may be included in an object existing in the air or space, such as an aircraft, a drone, a helicopter, a high altitude platform station (HAPS), a balloon, or a satellite. Furthermore, for example, the communication device 110 may be included in an object existing on the sea or under the sea, such as a ship or a submarine. Typically, such a mobile communication device 110 corresponds to the communication device 110B, and performs wireless communication with the communication device 110A to secure an access path to the communication control device 130. As a matter of course, even the mobile communication device 110 can be handled as the communication device 110A as long as the spectrum used in the wireless communication with the communication device 110A is not managed by the communication control device 130.

In the present disclosure, unless otherwise specified, the description "communication device 110" includes both meanings of the communication device 110A and the communication device 110B, and may be replaced with either one.

The communication device 110 can be used, operated, or managed by various operators. For example, a mobile network operator (MNO), a mobile virtual network operator (MVNO), a mobile network enabler (MNE), a mobile virtual network enabler (MVNE), a shared facility operator, a neutral host network (NHN) operator, a broadcaster, an enterprise, an educational institution (educational institutions, respective boards of education of local governments, or the like), a real estate (building, apartment, or the like) administrator, an individual, and the like can be assumed as operators related to the communication device 110. Note that the operator related to the communication device 110 is not particularly limited. Furthermore, the communication device 110A may be a shared facility used by a plurality of operators. Furthermore, different operators may perform installation, use, operation, and management of the facilities.

The communication device 110 operated by the operator is typically connected to the Internet via a core network. Furthermore, operation, management, and maintenance are performed by a function called Operation, Administration & Maintenance (OA&M). Furthermore, for example, as illustrated in Fig. 1, there may be an intermediate device (network manager) 110C that integrally controls the communication device 110 in the network. Note that there may be cases where the intermediate device is the communication device 110 or cases where the intermediate device is the communication control device 130.

The terminal 120 (User Equipment, User Terminal, User Station, Mobile Terminal, Mobile Station, or the like) is a device that performs wireless communication by a wireless communication service provided by the communication device 110. Typically, communication equipment such as a smartphone corresponds to the terminal 120. Note that a device having a wireless communication function can correspond to the terminal 120. For example, equipment such as a business camera having a wireless communication function can also correspond to the terminal 120 even if the wireless communication is not a main application. Furthermore, communication equipment that transmits data to the terminal 120, such as a wireless station for broadcasting business (field pickup unit (FPU)) that transmits an image for television broadcasting or the like from an outside (site) of a broadcast station to the broadcast station in order to broadcast sports or the like, also corresponds to the terminal 120. Furthermore, the terminal 120 is not necessarily used by a person. For example, like what is called machine type communication (MTC), equipment such as a factory machine or a sensor installed in a building may be network-connected to operate as the terminal 120. Furthermore, equipment called customer premises equipment (CPE) provided to secure connection to the Internet may behave as the terminal 120.

Furthermore, as represented by device-to-device (D2D) and vehicle-to-everything (V2X), the terminal 120 may include a relay communication function.

Furthermore, similarly to the communication device 110, the terminal 120 does not need to be fixedly installed or exist on the ground. For example, an object existing in the air or space, such as an aircraft, a drone, a helicopter, a satellite, or the like, may operate as the terminal 120. Furthermore, for example, an object existing on the sea or under the sea, such as a ship or a submarine, may operate as the terminal 120.

In the present disclosure, unless otherwise noted, the terminal 120 corresponds to an entity that terminates a wireless link using a spectrum that requires permission of the communication control device 130. However, depending on a function included in the terminal 120 or an applied network topology, the terminal 120 can perform an operation equivalent to that of the communication device 110. In other words, depending on the network topology, there may be cases where a device that can correspond to the communication device 110 such as a wireless access point corresponds to the terminal 120, or cases where a device that can correspond to the terminal 120 such as a smartphone corresponds to the communication device 110.

The communication control device 130 is typically a device that performs determination, use permission, instruction on, and/or management of communication parameters of the communication device 110. For example, database servers called TV white space database (TVWSDB), geolocation database (GLDB), spectrum access system (SAS), and automated frequency coordination (AFC) correspond to the communication control device 130. In other words, a database server having an authority and a role such as authentication and supervision of radio wave use related to secondary use of a spectrum can be regarded as the communication control device 130.

The communication control device 130 also corresponds to a database server having a role different from the above-described role. For example, a control device that performs radio wave interference control between communication devices represented by a Spectrum Manager (SM) in EN 303 387 of the European Telecommunications Standards Institute (ETSI), a Coexistence Manager (CM) in the Institute of Electrical and Electronics Engineers (IEEE) 802.19.1-2018, a Coexistence Manager (CxM) in CBRSA-TS-2001, or the like also corresponds to the communication control device 130. Furthermore, for example, a registered location secure server (RLSS) defined in IEEE 802.11-2016 also corresponds to the communication control device 130. That is, not limited to these examples, an entity responsible for determination, use permission, instruction, management, and the like of the communication parameters of the communication device 110 may be referred to as the communication control device 130. Basically, a control target of the communication control device 130 is the communication device 110, but the communication control device 130 may control the terminal 120 subordinate to the communication device 110.

The communication control device 130 also corresponds to a combination of a plurality of database servers in which the above-described roles are different. For example, CBRS Alliance SAS (CSAS) which is a combination of SAS and CxM illustrated in CBRSA-TS-2001 can also be regarded as the communication control device 130.

The communication control device 130 can also be achieved by mounting software having a function equivalent to that of the database server on one database server. For example, a SAS having a function or software equivalent to CxM can also be regarded as the communication control device 130.

There may be a plurality of the communication control devices 130 having similar roles. In a case where there is the plurality of communication control devices 130 having similar roles, at least one of the following three types of decision-making topologies can be applied to the communication control device 130.

- Autonomous decision-making
- Centralized decision-making
- Distributed decision-making

The autonomous decision-making is a decision-making topology in which an entity (a decision-making entity, here the communication control device 130) that makes a decision makes a decision independently from another decision-making entity. The communication control device 130 independently calculates necessary spectrum allocation and interference control. For example, in a case where the plurality of communication control devices 130 is arranged in a distributed manner as illustrated in Fig. 2, the autonomous decision-making can be applied.

The centralized decision-making is a decision-making topology in which a decision-making entity delegates decision-making to another decision-making entity. In a case where the centralized decision-making is performed, for example, a model as illustrated in Fig. 3 can be assumed. Fig. 3 illustrates a model (what is called master-slave type) in which one communication control device 130 performs centralized control of the plurality of communication control devices 130. In the model of Fig. 3, the communication control device 130A, which is the master, can control the communication control devices 130B, which are a plurality of slaves, to intensively make decisions.

The distributed decision-making (distributed decision-making) is a decision-making topology in which a decision-making entity makes a decision in cooperation with another decision-making entity. For example, while the plurality of communication control devices 130 independently makes a decision as in the autonomous decision-making in Fig. 2, mutual adjustment of decision-making results, negotiation, and the like performed by each communication control device 130 after making a decision may correspond to "distributed decision-making". Furthermore, for example, in the centralized decision-making in Fig. 3, for the purpose of load balancing or the like, performing dynamic delegation of decision-making authority to each slave communication control device 130B, deletion thereof, or the like by the master communication control device 130A can also be regarded as "distributed decision-making".

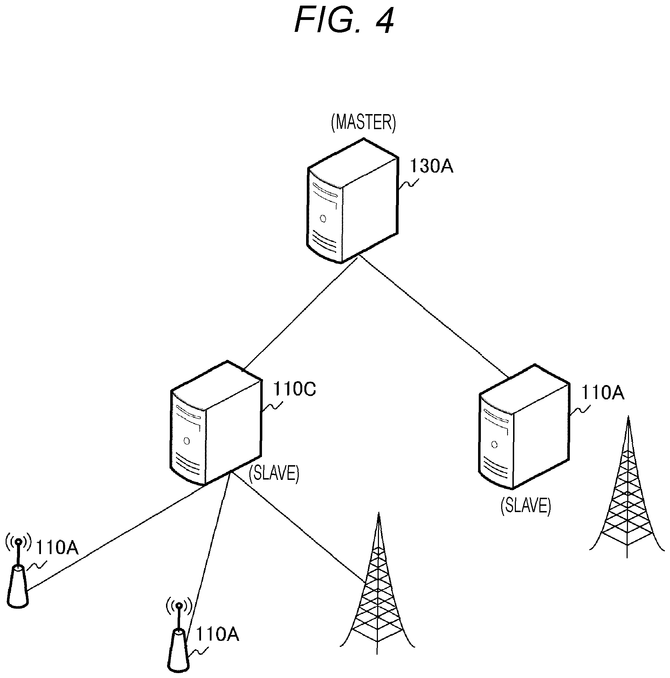

There may be cases where both the centralized decision-making and the distributed decision-making are applied. In Fig. 4, the slave communication control device 130B operates as an intermediate device that bundles the plurality of communication devices 110. It is not necessary for the master communication control device 130A to control the communication devices 110 bundled by the slave communication control device 130B, that is, the secondary system configured by the slave communication control device 130B. In this manner, as a modification example, implementation as illustrated in Fig. 4 is also possible.

The communication control device 130 may also acquire necessary information from entities other than the communication device 110 and the terminal 120 of the communication network 100 for its role. Specifically, for example, information necessary for protecting the primary system can be acquired from a database (regulatory database) managed or operated by a radio administration agency (national regulatory authority (NRA)) of a country or a region. Examples of the regulatory database include the Universal Licensing System (ULS) operated by the Federal Communications Commissions (FCC), and the like. Examples of information necessary for protecting the primary system include position information of the primary system, communication parameters of the primary system, an out-of-band emission (OOBE) limit, an adjacent channel leakage ratio (ACLR), adjacent channel selectivity, a fading margin, a protection ratio (PR), and the like. In a region where a fixed numerical value, an acquisition method, a derivation method, and the like are defined by a law or the like in order to protect the primary system, it is desirable to use information defined by the law as information necessary for protecting the primary system.

Furthermore, a database that records the communication device 110 and the terminal 120 that have been subjected to conformity authentication, such as an equipment authorization system (EAS) managed by the Office of Engineering and Technology (OET) of the FCC, also corresponds to the regulatory database. From such a regulatory database, it is possible to acquire information regarding an operable spectrum of the communication device 110 or the terminal 120, information regarding maximum equivalent isotropic radiated power (EIRP), and the like. Naturally, the communication control device 130 may use these pieces of information for protecting the primary system.

Furthermore, it can also be assumed that the communication control device 130 acquires radio wave sensing information from a radio wave sensing system installed and operated for the purpose of radio wave detection in the primary system. As a specific example, in Citizens Broadband Radio Service (CBRS) in the United States, the communication control device 130 acquires radio wave detection information of a ship radar as a primary system from a radio wave sensing system called an environmental sensing capability (ESC). Furthermore, in a case where the communication device 110 and the terminal 120 have a sensing function, the communication control device 130 may acquire radio wave detection information of the primary system from these.

Furthermore, it can also be assumed that the communication control device 130 acquires the activity information of the primary system from a portal system that manages the activity information of the primary system. As a specific example, in Citizens Broadband Radio Service (CBRS) in the United States, the communication control device 130 acquires activity information of a primary system from a calendar-type system called Informing Incumbent Portal. Protection of the primary system is achieved by enabling a protection area called Dynamic Protection Area (DPA) on the basis of the acquired activity information. Protection of the primary system is also implemented by an equivalent system called Informing Incumbent Capability (IIC) by a similar technique.

The interface between the respective entities constituting this system model may be wired or wireless. For example, not only a wired line but also a wireless interface that does not depend on spectrum sharing may be used as an interface between the communication control device 130 and the communication device 110. Examples of the wireless interface that does not depend on spectrum sharing include a wireless communication line provided by a mobile communication operator via a licensed band, Wi-Fi communication using an existing license-exempt band, and the like.

<1.2 Terms Related to Spectrum and Sharing>

As described above, the present embodiment will be described assuming a dynamic spectrum access environment. As a representative example of the dynamic spectrum access, a mechanism defined by the CBRS in the United States (that is, a mechanism defined in Part 96 Citizens Broadband Radio Service of the FCC Rules of the United States) will be described.

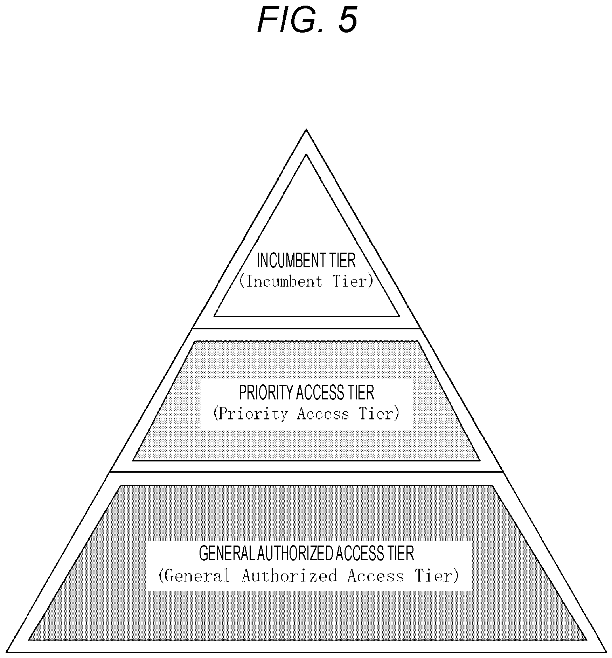

In the CBRS, as illustrated in Fig. 5, each of users in the frequency band is classified into one of three groups. This group is referred to as a tier. The three groups are referred to as an incumbent tier, a priority access tier, and a general authorized access (GAA) tier, respectively.

The incumbent tier is a group including existing users who conventionally use frequency bands. The existing user is also generally referred to as a primary user. In the CBRS, the Department of Defense (DOD), fixed satellite operators, and new rule excepted radio broadband licensees (Grandfathered Wireless Broadband Licensees (GWBL)) in the United States are defined as existing users. The incumbent tier is not required to avoid interference to the priority access tier and the GAA tier with lower priorities or to suppress use of the frequency band. Furthermore, the incumbent tier is protected from interference by the priority access tier and the GAA tier. That is, users of the incumbent tier can use the frequency band without considering the existence of other groups.

The priority access tier is a group of users who use the frequency band on the basis of the above-described priority access license (PAL). A user of the priority access tier is also generally referred to as a secondary user. When the frequency band is used, the priority access tier is required to avoid interference and to suppress use of the frequency band for the incumbent tier having a higher priority than the priority access tier. On the other hand, neither avoiding interference nor suppressing use of the frequency band is required for the GAA tier having a lower priority than the priority access tier. Furthermore, the priority access tier is not protected from interference by the incumbent tier with a higher priority, but is protected from interference by the GAA tier with a lower priority.

The GAA tier is a group formed by frequency band users that do not belong to the incumbent tier and the priority access tier. Similarly to the priority access tier, in general, a user of the GAA tier is also referred to as a secondary user. However, since the priority of shared use is lower than that of the priority access tier, it is also referred to as a low priority secondary user. When the frequency band is used, the GAA tier is required to avoid interference and suppress use of the frequency band for the incumbent tier and the priority access tier having higher priorities. Furthermore, the GAA tier is not protected from interference by the incumbent tier and priority access tier with higher priority.

Although the CBRS mechanism has been described above as a representative example of the dynamic spectrum access, the present embodiment is not limited to the definition of CBRS. For example, as illustrated in Fig. 5, the CBRS generally employs a three-tier structure, but a two-tier structure may be employed in the present embodiment. Typical examples of the two-tier structure include authorized shared access (ASA), licensed shared access (LSA), evolved LSAs (eLSAs), TV band white space (TVWS), US 6 GHz band sharing, and the like. In the ASA, the LSA, and the eLSA, there is no GAA tier, and a structure equivalent to a combination of the incumbent tier and the priority access tier is employed. Furthermore, in the TVWS and the US 6 GHz band sharing, there is no priority access tier, and a structure equivalent to a combination of the incumbent tier and the GAA tier is employed. Furthermore, there may be four or more tiers. Specifically, for example, four or more tiers may be generated by providing a plurality of intermediate layers corresponding to the priority access tiers and giving different priorities to the respective intermediate layers, and the like. Furthermore, for example, the tiers may be increased by similarly dividing the GAA tier and giving priorities, and the like. That is, each group may be divided.

Furthermore, the primary system of the present embodiment is not limited to the definition of CBRS. For example, as an example of the primary system, a wireless system such as TV broadcasting, a fixed microwave line (fixed system (FS)), a meteorological radar, a radio altimeter, a wireless train control system (communications-based train control), and a radio astronomy are assumed. Furthermore, the present embodiment is not limited thereto, and any wireless system can be the primary system of the present embodiment.

Furthermore, as described above, the present embodiment is not limited to the environment of spectrum sharing. In general, in spectrum sharing or spectrum secondary use, an existing system that uses a target frequency band is referred to as a primary system, and a secondary user is referred to as a secondary system. However, in a case where the present embodiment is applied to an environment other than the spectrum sharing environment, they should be read by replacing with other terms. For example, a macrocell base station in a heterogeneous network (HetNet) may be the primary system, and a small cell base station or a relay station may be the secondary system. Furthermore, the base station may be the primary system, and a relay user equipment (UE) or a vehicle UE that implements D2D or V2X existing within its coverage may be the secondary system. The base station is not limited to a fixed type, and may be a portable type or a mobile type. In such a case, for example, the communication control device 130 of the present embodiment may be included in a core network, a base station, a relay station, a relay UE, or the like.

Furthermore, in a case where the present embodiment is applied to an environment other than the spectrum sharing environment, the term "frequency or spectrum" in the present disclosure is replaced with another term shared by the application destination. For example, terms such as "resource", "resource block", "resource element", "resource pool", "channel", "component carrier", "carrier", "subcarrier", and "bandwidth part (BWP)" or another term having a meaning equivalent or similar thereto are assumed to be used.

<<2. Description of Various Procedures Assumed in Present Embodiment>>

Here, a basic procedure that can be used in the implementation of the present embodiment will be described. Note that up to <2.5> described later will be described on the assumption that the processing is mainly performed in the communication device 110A.

<2.1 Registration Procedure>

A registration procedure is a procedure for registering information of a wireless system that intends to use the frequency band. More specifically, it is a procedure for registering device parameters related to the communication device 110 of the wireless system in the communication control device 130. Typically, the registration procedure is started by that the communication device 110 representing a wireless system that intends to use the frequency band notifies the communication control device 130 of a registration request including the device parameters. Note that, in a case where a plurality of the communication devices 110 belongs to the wireless system that intends to use the frequency band, the device parameters of each of the plurality of communication devices is included in the registration request. Furthermore, a device that transmits the registration request as a representative of the wireless system may be appropriately determined.

<2.1.1 Details of Required Parameters>

The device parameters refer to, for example, the following information.

- Information regarding a user of the communication device 110 (hereinafter described as user information)
- Information unique to the communication device 110 (hereinafter described as unique information)
- Information regarding a position of the communication device 110 (hereinafter described as position information)
- Information regarding an antenna included in the communication device 110 (hereinafter described as antenna information)
- Information regarding the wireless interface included in the communication device 110 (hereinafter described as wireless interface information)
- Legal information regarding the communication device 110 (hereinafter described as legal information)
- Information regarding an installer of the communication device 110 (hereinafter described as installer information)
- Information regarding a group to which the communication device 110 belongs (hereinafter, group information)

The device parameters are not limited to the above. Information other than these may be handled as the device parameters. Note that the device parameters do not need to be transmitted at once, and may be transmitted in a divided manner a plurality of times. That is, a plurality of registration requests may be transmitted for one registration procedure. In this manner, one procedure or one processing in the procedure may be performed a plurality of times. This similarly applies to the procedure described below.

The user information is information related to the user of the communication device 110. For example, a user ID, an account name, a user name, a user contact address, a call sign, and the like can be assumed. The user ID and the account name may be independently generated by the user of the communication device 110 or may be issued in advance by the communication control device 130. As the call sign, it is desirable to use a call sign issued by the NRA.

The user information can be used, for example, in an application of interference resolution. As a specific example, in a spectrum use notification procedure described in <2.5> to be described later, even if the communication control device 130 makes the use stop determination on the spectrum being used by the communication device 110 and gives an instruction based on the use stop determination, there may be a case where notification of a spectrum use notification request of the spectrum is continuously provided. In this case, suspecting a failure of the communication device 110, the communication control device 130 can give a behavior check request for the communication device 110 to the user contact address included in the user information. Not limited to this example, in a case where it is determined that the communication device 110 is performing an operation against communication control performed by the communication control device 130, the communication control device 130 can make a contact using the user information.

The unique information is information that can specify the communication device 110, product information of the communication device 110, information regarding hardware or software of the communication device 110, and the like.

The information that can specify the communication device 110 can include, for example, a manufacturing number (serial number) of the communication device 110, an ID of the communication device 110, and the like. The ID of the communication device 110 may be uniquely assigned by the user of the communication device 110, for example.

The product information of the communication device 110 may include, for example, an authentication ID, a product model number, information regarding a manufacturer, and the like. The authentication ID is, for example, an ID given from a certificate authority in each country or region, such as an FCC ID in the United States, a CE number in Europe, and a technical standard conformity certificate (technical standard) in Japan. An ID issued by an industry association or the like on the basis of a unique authentication program may also be regarded as the authentication ID.

The unique information represented by these may be used, for example, for a permission list (allowlist) or a denial list (denylist). For example, in a case where any piece of information regarding the communication device 110 in operation is included in the denial list, the communication control device 130 can instruct the communication device 110 to stop using the spectrum in the spectrum use notification procedure described in <2.5> described later. Moreover, the communication control device 130 can take a behavior of not canceling the use stop measure until the communication device 110 is cancelled from the denial list. Furthermore, for example, the communication control device 130 can reject registration of the communication device 110 included in the denial list. Furthermore, for example, the communication control device 130 can also perform an operation that does not consider the communication device 110 corresponding to the information included in the denial list in the interference calculation of the present disclosure or that considers only the communication device 110 corresponding to the information included in the permission list in the interference calculation.

Note that, in the present disclosure, the FCC ID may be used as information regarding transmission power. For example, in an equipment authorization system (EAS) database, which is a type of regulatory database, information regarding a device for which authentication has been acquired can be acquired, and an application programming interface (API) thereof is also disclosed. For example, maximum EIRP information (certified maximum EIRP) or the like for which authentication has been acquired can be included in the information together with the FCC ID. Since such power information is associated with the FCC ID, the FCC ID can be treated as the transmission power information. Similarly, the FCC ID may be handled as one equivalent to other information included in the EAS. Furthermore, in a case where information associated with an authentication ID is present, the authentication ID may also be handled as one equivalent to the information without being limited to the FCC ID.

The information regarding the hardware of the communication device 110 can include, for example, transmission power class information. For example, in Title 47 Code of Federal Regulations (C.F.R) Part 96 in the United States, two types of classes Category A and Category B are defined as the transmission power class information, and information regarding the hardware of the communication device 110 conforming to the definition can include information regarding which of the two types of classes it belongs to. Furthermore, in TS36.104 and TS38.104 of 3rd Generation Partnership Project (3GPP), some classes of eNodeB and gNodeB are defined, and these definitions can also be used.

The transmission power class information can be used, for example, in an application of interference calculation. The interference calculation can be performed using the maximum transmission power defined for each class as the transmission power of the communication device 110.

The information regarding the software of the communication device 110 can include, for example, version information, a build number, and the like regarding an execution program in which processing necessary for interaction with the communication control device 130 is described. Furthermore, version information, a build number, and the like of software for operating as the communication device 110 may also be included.

The position information is typically information that can specify the position of the communication device 110. For example, it is coordinate information acquired by a positioning function represented by the Global Positioning System (GPS), Beidou, the Quasi-Zenith Satellite System (QZSS), Galileo, or the Assisted Global Positioning System (A-GPS). Typically, information related to latitude, longitude, ground level or sea level, altitude, and positioning error can be included. Alternatively, for example, the position information may be position information registered in an information management device managed by the National Regulatory Authority (NRA) or its entrusted institution. Alternatively, for example, coordinates of an X axis, a Y axis, and a Z axis with a specific geographical position as an origin may be used. Furthermore, together with such coordinate information, an identifier indicating whether the communication device 110 exists outdoors or indoors can be given.

Furthermore, the position information may include positioning accuracy information (location uncertainty). For example, both or one of a horizontal plane and a vertical plane may be provided as the positioning accuracy information. For example, the positioning accuracy information (location uncertainty) can be used as a correction value when calculating a distance to any point. Furthermore, for example, the positioning accuracy information can also be used as region information in which the communication device 110 is likely to be located. In this case, it is used for processing of specifying spectrum information that can be used in a region indicated by the positioning accuracy information.

Furthermore, the position information may be information indicating a region in which the communication device 110 is located. For example, information indicating a region determined by the government, such as a postal code or an address, may be used. Furthermore, for example, the region may be indicated by a set of three or more geographic coordinates. These pieces of information indicating the region may be provided together with the coordinate information.

Furthermore, in a case where the communication device 110 is located indoors, information indicating the floor of a building where the communication device 110 is located can also be included in the position information. For example, an identifier indicating the number of floors, the ground, or the underground, or the like can be included in the position information. Furthermore, for example, information indicating a further closed space inside a building, such as a room number and a room name in the building, can be included in the position information.

Typically, the positioning function is desirably included in the communication device 110. However, there may be cases where performance of the positioning function does not satisfy the required accuracy. Furthermore, even if the performance of the positioning function satisfies the required accuracy, there may be a case where it is not always possible to acquire the position information that satisfies the required accuracy depending on an installation position of the communication device 110. Therefore, a device different from the communication device 110 may include the positioning function, and the communication device 110 may acquire information related to the position from the device. The device having the positioning function may be an available existing device, or may be provided by the installer of the communication device 110. In such a case, it is desirable that the position information measured by the installer of the communication device 110 is written in the communication device 110.

The antenna information is typically information indicating performance, a configuration, and the like of an antenna included in the communication device 110. Typically, for example, information such as an antenna installation height, a tilt angle (downtilt), a horizontal orientation (azimuth), a boresight, an antenna peak gain, and an antenna model can be included.

Furthermore, the antenna information can also include information regarding a formable beam. For example, information such as a beam width, a beam pattern, and an analog or digital beamforming capability can be included.

Furthermore, the antenna information can also include information regarding performance and configuration of multiple input multiple output (MIMO) communication. For example, information such as the number of antenna elements and the maximum number of spatial streams (or the number of MIMO layers) can be included. Furthermore, codebook information to be used, weight matrix information, and the like can also be included. The weight matrix information includes a unitary matrix, a zero-forcing (ZF) matrix, a minimum mean square error (MMSE) matrix, and the like, which are obtained by singular value decomposition (SVD), eigen value decomposition (EVD), block diagonalization (BD), and the like. Furthermore, in a case where the communication device 110 includes a function such as maximum likelihood detection (MLD) that requires nonlinear calculation, information indicating this included function may be included in the antenna information.

Furthermore, the antenna information may include a Zenith of Direction Departure (ZoD). The ZoD is a type of radio wave arrival angle. Note that, instead of being notified by the communication device 110, ZoD may be estimated and notified by another communication device 110 from radio waves radiated from the antenna of the communication device 110. In this case, the communication device 110 may be a device that operates as a base station or an access point, a device that performs D2D communication, a moving relay base station, or the like. The ZoD may be estimated by a radio wave direction of arrival estimation technology such as multiple signal classification (MUSIC) or estimation of signal propagation via rotation invariance techniques (ESPRIT). Furthermore, the ZoD can be used by the communication control device 130 as measurement information.

The wireless interface information is typically information indicating a wireless interface technology included in the communication device 110. For example, identifier information indicating a technology used in GSM, CDMA2000, UMTS, E-UTRA, E-UTRA NB-IoT, 5G NR, 5G NR NB-IoT or a further next generation cellular system can be included as the wireless interface information. Furthermore, identifier information indicating a derivative technology based on Long Term Evolution (LTE)/5G such as MulteFire, Long Term Evolution-Unlicensed (LTE-U), or NR-Unlicensed (NR-U) can be included. Furthermore, identifier information indicating a standard technology such as a metropolitan area network (MAN) such as WiMAX or WiMAX2+ or a wireless LAN of the IEEE 802.11 series can also be included. Furthermore, identifier information indicating an extended global platform (XGP) or a shared XGP (sXGP) may be used. It may be identifier information of a communications technology for local power, wide area (LPWA). Furthermore, identifier information indicating a proprietary wireless technology can also be included. Furthermore, a version number or a release number of the technical specification that defines these technologies may also be included as the wireless interface information.

Furthermore, the wireless interface information can also include frequency band information supported by the communication device 110. For example, the frequency band information can be represented by an upper limit frequency, a lower limit frequency, a center frequency, a bandwidth, a 3GPP operating band number, or a combination of at least two of these, or the like. Furthermore, one or more pieces of frequency band information can be included in the wireless interface information.

The frequency band information supported by the communication device 110 can further include information indicating capability of a band extension technology such as carrier aggregation (CA) or channel bonding. For example, combinable band information or the like can be included. Furthermore, the carrier aggregation can also include information regarding a band desired to be used as a primary component carrier (PCC) or a secondary component carrier (SCC). Furthermore, the number of component carriers (the number of CCs) that can be aggregated at the same time can be included.

The frequency band information supported by the communication device 110 may further include information indicating a combination of frequency bands supported by the dual connectivity and the multi connectivity. Furthermore, information of another communication device 110 that cooperatively provides the dual connectivity and the multi connectivity may also be provided. The communication control device 130 may perform determination of the communication control disclosed in the present embodiment in consideration of another communication device 110 having a cooperative relationship or the like in subsequent procedures.

The frequency band information supported by the communication device 110 may also include information indicating radio wave use priority such as PAL and GAA.

Furthermore, the wireless interface information can also include modulation scheme information supported by the communication device 110. For example, as a representative example, information indicating a primary modulation scheme such as frequency shift keying (FSK), n-value phase shift keying (PSK, where n is a multiplier of two, such as two, four, eight, or the like), and n-value quadrature amplitude modulation (QAM, where n is a multiplier of four, such as four, sixteen, 64, 256, 1024) can be included. Furthermore, information indicating a secondary modulation scheme such as orthogonal frequency division multiplexing (OFDM), scalable OFDM, DFT spread OFDM (DFT-s-OFDM), generalized frequency division multiplexing (GFDM), and filter bank multi carrier (FBMC) can be included.

Furthermore, the wireless interface information can also include information regarding an error correction code. For example, capabilities of a turbo code, a low density parity check (LDPC) code, a polar code, an erasure correction code, and the like, and coding rate information to be applied can be included.

The modulation scheme information and the information regarding the error correction code can also be expressed by a modulation and coding scheme (MCS) index as another aspect.

Furthermore, the wireless interface information can also include information indicating a function specific to each wireless technical specification supported by the communication device 110. For example, as a representative example, there is transmission mode (TM) information defined in LTE. Furthermore, those having two or more modes for a specific function can be included in the wireless interface information such as TM information. Furthermore, in the technical specifications, in a case where the communication device 110 supports a function that is not essential in the specification even if there are not two or more modes, information indicating the supported function can also be included. Furthermore, the wireless interface information can also include radio access technology (RAT) information supported by the communication device 110. For example, information indicating time division multiple access (TDMA), frequency division multiple access (FDMA), orthogonal frequency division multiple access (OFDMA), power division multiple access (PDMA), code division multiple access (CDMA), sparse code multiple access (SCMA), interleave division multiple access (IDMA), spatial division multiple access (SDMA), carrier sense multiple access/collision avoidance (CSMA/CA), carrier sense multiple access/collision detection (CSMA/CD), or the like can be included. Note that the TDMA, FDMA, and OFDMA are classified into orthogonal multiple access (OMA). The PDMA, CDMA, SCMA, IDMA, and SDMA are classified into non-orthogonal multiple access (NOMA). A representative example of the PDMA is a technique implemented by a combination of superposition coding (SPC) and successive interference canceller (SIC). The CSMA/CA and CSMA/CD are classified into opportunistic access.

In a case where the wireless interface information includes information indicating the opportunistic access, information indicating details of an access scheme may be further included. As a specific example, information indicating which of frame based equipment (FBE) and load based equipment (LBE) defined in EN 301 598 of ETSI may be included.

In a case where the radio interface information indicates the LBE, the wireless interface information may further include LBE-specific information such as a priority class.

Furthermore, the wireless interface information can also include information regarding a duplex mode supported by the communication device 110. As a representative example, information regarding a scheme, for example, frequency division duplex (FDD), time division duplex (TDD), or full duplex (FD) can be included for example.

In a case where TDD is included as the wireless interface information, TDD frame structure information used or supported by the communication device 110 can be given. Furthermore, information related to the duplex mode may be included for each frequency band indicated by the frequency band information.

In a case where the FD is included as the wireless interface information, information regarding an interference power detection level may be included.

Furthermore, the wireless interface information can also include information regarding a transmission diversity technique supported by the communication device 110. For example, space time coding (STC) or the like may be included.

Furthermore, the wireless interface information can also include guard band information. For example, information regarding a predetermined guard band size in the wireless interface can be included. Alternatively, for example, information regarding a guard band size desired by the communication device 110 may be included.

Regardless of the aspects described above, the wireless interface information may be provided for each frequency band.

The legal information is typically information regarding regulations that the communication device 110 has to comply with and defined by the radio administration agency or an equivalent agency in each country or region, authentication information acquired by the communication device 110, or the like. Typically, the information regarding the regulations can include, for example, upper limit value information of out-of-band emission, information regarding a blocking characteristic of the receiver, and the like. Typically, the authentication information can include, for example, type approval information, legal regulation information serving as a standard of authentication acquisition, and the like. The type approval information corresponds to, for example, FCC ID in the United States, the technical standards conformity certification in Japan, and the like. The legal regulation information corresponds to, for example, FCC regulation numbers in the United States, ETSI Harmonized Standard number in Europe, and the like.

Among the legal information, regarding numerical values, those defined in the standard specification of wireless interface technology may be substituted. The standard specification of the wireless interface technology corresponds to, for example, 3GPP TS36.104 or TS38.104. An adjacent channel leakage ratio (ACLR) is defined therein. Instead of the upper limit value information of the out-of-band emission, an upper limit value of the out-of-band emission may be derived and used using the ACLR defined in the standard specification. Furthermore, the ACLR itself may be used as necessary. Furthermore, adjacent channel selectivity (ACS) may be used instead of the blocking characteristic. Furthermore, these may be used in combination, or an adjacent channel interference ratio (ACIR) may be used. Note that, in general, the ACIR has the following relationship with the ACLR and ACS.

[Math. 1]

$$ACIR = \left( \frac{1}{ACS} + \frac{1}{ACLR} \right)^{-1} \qquad \text{... Formula 1}$$

Note that Formula 1 uses true value expression, but may be expressed by logarithmic expression.

The installer information can include information capable of specifying a person who installs the communication device 110 (installer), unique information associated with the installer, and the like. Typically, the installer information can include information regarding a person who is responsible for the position information of the communication device 110, such as a certified professional installer (CPI) defined in WINNF-TS-0112. The CPI discloses certified professional installer registration ID (CPIR-ID) and CPI name. Furthermore, as unique information associated with the CPI, for example, a contact address (mailing address or contact address), an e-mail address, a telephone number, a public key identifier (PKI), and the like are disclosed. The present embodiment is not limited thereto, and other information related to the installer may be included in the installer information as necessary.

The group information can include information regarding a communication device group to which the communication device 110 belongs. Specifically, for example, information related to the same or equivalent type of group as disclosed in WINNF-SSC-0010 can be included. Furthermore, for example, in a case where a communication operator manages the communication devices 110 in units of groups according to its own operation policy, information regarding the groups can be included in the group information.

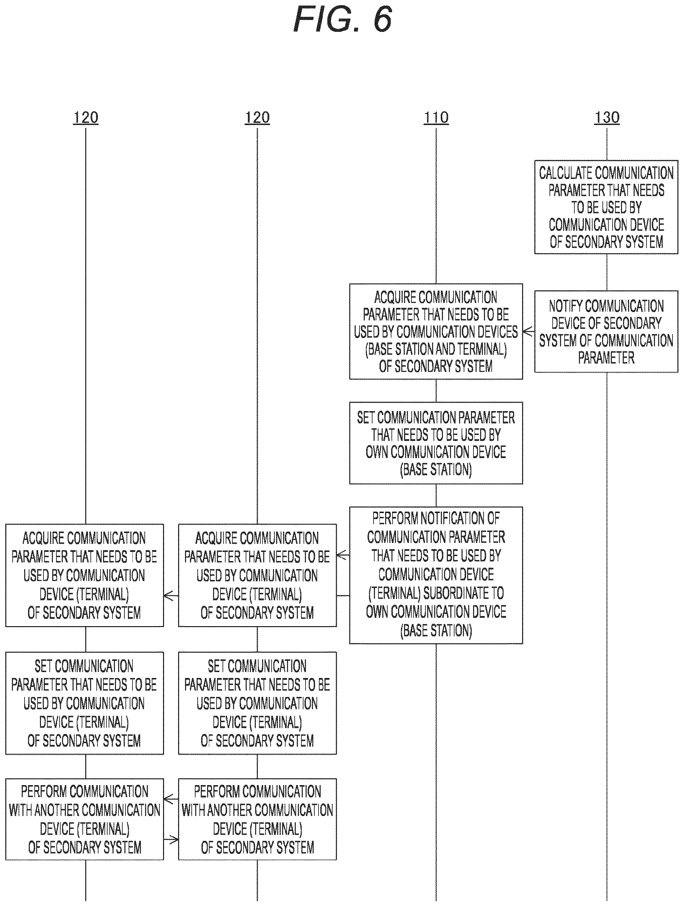

The information listed so far may be estimated by the communication control device 130 from other information provided from the communication device 110 without provision from the communication device 110 to the communication control device 130. Specifically, for example, the guard band information can be estimated from the wireless interface information. In a case where the wireless interface used by the communication device 110 is E-UTRA or 5G NR, it can be estimated on the basis of the transmission bandwidth specification of E-UTRA described in 3GPP TS36.104 illustrated in Fig. 6, the transmission bandwidth specification of 5G NR described in 3GPP TS38.104 and tables described in TS38.104 illustrated below.

[Table 1]

| Table 5.6-1 Transmission bandwidth configuration NRB in E-UTRA channel bandwidths (cited from Table 5.6-1 in 3GPP TS36.104) | | | | | | |
|---|---|---|---|---|---|---|
| Channel bandwidth BW$_{Channel}$ [MHz] | 1.4 3 | 3 | 5 | 10 | 15 | 20 |
| Transmission bandwidth configuration $N_{RB}$ | 6 | 15 | 25 | 50 | 75 | 100 |

[Table 2]

Table 5.3.3-1: Minimum guardband (kHz) (FR1) (cited from Table 5.3.3-1 in 3GPP TS38.104)

| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| 15 | 242.5 | 312.5 | 382.5 | 462.5 | 522.5 | 592.5 | 552.5 | 692.5 | N.A | N.A | N.A | N.A | N.A |
| 30 | 505 | 665 | 645 | 805 | 785 | 945 | 905 | 1045 | 825 | 965 | 925 | 885 | 845 |
| 60 | N. A | 1010 | 990 | 1330 | 1310 | 1290 | 1610 | 1570 | 1530 | 1490 | 1450 | 1410 | 1370 |

[Table 3]

| Table 5.3.3-2: Minimum guardband (kHz) (FR2) (cited from Table 5.3.3-2 in 3GPP TS38.104) | | | | |
|---|---|---|---|---|
| SCS (kHz) | 50MHz | 100MHz | 200MHz | 400MHz |
| 60 | 1210 | 2450 | 4930 | N. A |
| 120 | 1900 | 2420 | 4900 | 9860 |

[Table 4]

| Table 5.3.3-3: Minimum guardband (kHz) of SCS 240 kHz SS/PBCH block (FR2) (cited from Table 5.3.3-3 in 3GPP TS38.104) | | | |
|---|---|---|---|
| SCS (kHz) | 100MHz | 200MHz | 400MHz |
| 240 | 3800 | 7720 | 15560 |

In other words, it is sufficient that the communication control device 130 can acquire the information listed so far, and the communication device 110 is not necessarily required to provide the information to the communication control device 130. Furthermore, the communication control device 130B of the intermediate device (for example, the network manager) that bundles the plurality of communication devices 110 does not need to provide the information to the communication control device 130A. The provision of information from the communication device 110 or the intermediate device (the communication control device 130B) to the communication control device 130 or 130A is merely one means of information provision in the present embodiment. The information listed so far means information that can be necessary for the communication control device 130 to normally complete this procedure, and means for providing the information does not matter. For example, in WINNF-TS-0061, such a method is called multi-step registration and allowed.

Furthermore, as a matter of course, the information listed so far is selectively applicable depending on the local legal system and technical specifications.

<2.1.1.1 Supplement of Required Parameters>

In the registration procedure, in some cases, it is assumed that the device parameters related to not only the communication device 110 but also the terminal 120 are required to be registered in the communication control device 130. In such cases, the term "communication device" in the description given in <2.1.1> may be replaced with a term "terminal" or a similar term. Furthermore, parameters specific to "terminal", not described in <2.1.1>, may also be handled as required parameters in the registration procedure. For example, there is a user equipment (UE) category defined in 3GPP, and the like.

<2.1.2 Details of Registration Processing>

As described above, the communication device 110) representing a wireless system that intends to use a shared frequency band generates a registration request including the device parameters and notifies the communication control device 130 of the registration request.

Here, in a case where the installer information is included in the device parameters, the communication device 110 may perform tamper-proofing or the like on the registration request by using the installer information. Furthermore, a part or all of the information included in the registration request may be subjected to encryption processing. Specifically, for example, a unique public key may be shared in advance between the communication device 110 and the communication control device 130, and the communication device 110 may encrypt information using a secret key corresponding to the public key. Examples of the encryption target include security sensitive information such as the position information.

Note that there may be a case where IDs and pieces of position information of the communication devices 110 are disclosed and the communication control device 130 holds in advance the ID and the position information of the main communication device 110 existing in its coverage. In such a case, since the communication control device 130 can acquire the position information from the ID of the communication device 110 that has transmitted the registration request, the position information does not need to be included in the registration request. Furthermore, it is also conceivable that the communication control device 130 returns necessary device parameters to the communication device 110 that has transmitted the registration request, and in response to this, the communication device 110 transmits a registration request including the device parameters necessary for registration. In this manner, the information included in the registration request may be different depending on the case.

After receiving the registration request, the communication control device 130 performs registration processing of the communication device 110 and returns a registration response according to a processing result. If there is no shortage or abnormality of information necessary for registration, the communication control device 130 records the information in an internal or external storage device and provides notification of normal completion. Otherwise, notification of a registration failure is provided. In a case where the registration is normally completed, the communication control device 130 may allocate an ID to each of the communication devices 110 and provide notification of such ID information at the time of response. In a case where the registration fails, the communication device 110 may provide notification of a revised registration request again. Furthermore, the communication device 110 may change the registration request and try the registration procedure until the normal completion.

Note that the registration procedure is sometimes executed even after the registration is normally completed. Specifically, for example, the registration procedure can be re-executed in a case where the position information is changed beyond a predetermined standard due to movement, accuracy improvement, or the like. The predetermined standard is typically determined by the legal system in each country or region. For example, in 47 C.F.R. Part 15 in the United States, a Mode II personal/portable white space device, that is, equipment using a free spectrum is required to perform registration again in a case where its position changes by 100 meters or more.

<2.2 Available Spectrum Query Procedure>

An available spectrum query procedure is a procedure in which the wireless system that intends to use the shared frequency band inquires of the communication control device 130 for information regarding an available spectrum. Note that the available spectrum query procedure does not necessarily need to be performed. Furthermore, the communication device 110 that makes an inquiry on behalf of the wireless system that intends to use the shared frequency band may be the same as or different from the communication device 110 that has generated the registration request. Typically, the communication device 110 that makes an inquiry notifies the communication control device 130 of a query request including information that can specify the communication device 110, and thereby the procedure is started.

Here, typically, the available spectrum information is information indicating a spectrum in which the communication device 110 can safely perform secondary use without giving fatal interference to the primary system.

The available spectrum information is determined, for example, on the basis of a secondary use prohibited area called an exclusion zone. Specifically, for example, in a case where the communication device 110 is installed in the secondary use prohibited area provided for the purpose of protecting the primary system using a frequency channel FI, the communication device 110 is not notified of the frequency channel F1 as an available channel.

The available spectrum information can also be determined, for example, by an interfering degree with respect to the primary system. Specifically, for example, in a case where it is determined that fatal interference is given to the primary system even outside the secondary use prohibited area, such a frequency channel is not provided in notification as an available channel in some cases. An example of a specific calculation method is described in <2.2.2> described later.

Furthermore, as described above, there may be frequency channels that are not provided in notification as available due to conditions other than primary system protection requirements. Specifically, for example, in order to avoid interference that may occur between the communication devices 110 in advance, there may be a case where a frequency channel being used by one communication device 110 existing in the vicinity of another communication device 110 is not provided in notification as an available channel. In this manner, the available spectrum information set in consideration of interference with another communication device 110 may be set as, for example, "use recommended spectrum information" and provided together with the available spectrum information. That is, the "use recommended spectrum information" is desirably a subset of the available spectrum information.

Even in a case where there is an influence on the primary system, if the influence can be avoided by reducing the transmission power, the same spectrum as that of the primary system or the communication device 110 in the vicinity may be provided in notification as an available channel. In such a case, typically, maximum allowed transmission power information is included in the available spectrum information. The maximum allowed transmission power is typically expressed by EIRP. The maximum allowed transmission power is not necessarily limited thereto, and may be provided by, for example, a combination of conducted power and an antenna gain. Moreover, the antenna gain may be set to an allowed peak gain for each spatial direction.

<2.2.1 Details of Required Parameters>

As information that can specify the wireless system that intends to use the shared frequency band, for example, unique information registered at the time of the registration procedure, the above-described ID information, and the like can be assumed.

Furthermore, the query request can also include query requirement information. The query requirement information can include, for example, information indicating a frequency band for which it is desired to know whether or not it is available. Furthermore, for example, the transmission power information can be included. The communication device 110 that makes an inquiry can include the transmission power information, for example, in a case where it is desired to know only spectrum information in which it is likely that desired transmission power can be used. The query requirement information does not necessarily need to be included in the query request.

The information indicating the frequency band may also include information indicating a format of the available spectrum information. In the IEEE 802.11 standard, a channel number is defined for each band. For example, a flag for requesting availability of a channel defined in such wireless interface technical specifications may be included. As another form, a flag for requesting availability of a unit spectrum range instead of the defined channel may be included. In a case where the unit spectrum is 1 MHz, the available spectrum information is requested for each spectrum range of 1 MHz. In a case where this flag is used, desired unit spectrum information may be enclosed in the flag.

Furthermore, the query request can also include a measurement report. The measurement report includes results of measurement performed by the communication device 110 and/or the terminal 120. Some or all of the measurement results may be represented by raw data or may be represented by processed data. For example, standardized metrics represented by reference signal received power (RSRP), reference signal strength indicator (RSSI), and reference signal received quality (RSRQ) can be used for measurement.

<2.2.2 Details of Available Spectrum Evaluation Processing>

After receiving the query request, the available spectrum is evaluated on the basis of the query requirement information. For example, as described above, the available spectrum can be evaluated in consideration of existence of the primary system, the secondary use prohibited area thereof, and the communication device 110 in the vicinity.

The communication control device may derive the secondary use prohibited area. For example, in a case where maximum transmission power PMaxTx (dBm) and minimum transmission power PMinTx (dBm) are defined, it is possible to calculate a range of a separation distance between the primary system and the secondary system from the following expression and determine the secondary use prohibited area.

[Math. 2]

$$PL^{-1}\left(P_{MaxTx(dBm)} - I_{Th(dBm)}\right)_{(dB)} \leq d < PL^{-1}\left(P_{MinTx(dBm)} - I_{Th(dBm)}\right)_{(dB)}$$

$$... \text{Formula 2}$$

$I_{Th(dBm)}$ is allowable interference power (a limit value of allowable interference power), d is a distance between a predetermined reference point and the communication device 110, and PL() $_{(dB)}$ is a function of a propagation loss. Therefore, the spectrum availability can be determined according to the positional relationship between the primary system and the communication device 110. Furthermore, in a case where transmission power information or power range information desired to be used by the communication device 110 is supplied in a request, the spectrum availability can be determined by calculating $PL^{-1}(P_{Tx(dBm)} - I_{Th(dBm)})$ and performing a comparison with the above-described range formula.

Error! A reference source is not found. The maximum allowed transmission power information may be derived. Typically, the maximum allowed transmission power information is calculated by using allowable interference power information in the primary system or a protection zone thereof, position information of the reference point for calculating an interference power level suffered by the primary system, registration information of the communication device 110, and a propagation loss estimation model. Specifically, as an example, it is calculated by the following mathematical expression.

[Math. 3]

$$P_{MaxTx(dBm)} = I_{Th(dBm)} + PL(d)_{(dB)}$$

$$... \text{Formula 3}$$

In Formula 2, an antenna gain in a transceiver is not included, but the antenna gain in the transceiver may be included according to a maximum allowed transmission power expression method (EIRP, conducted power, or the like) or a reception power reference point (antenna input point, antenna output point, or the like). Furthermore, a safety margin or the like for compensating for variation due to fading may be included. Furthermore, a feeder loss may be considered as necessary. Furthermore, it is possible to similarly perform calculation for an adjacent channel by adding the adjacent channel leakage ratio (ACRL) or an out-of-band emission maximum value.

Furthermore, Formula 2 is described on the basis of the assumption that the single communication device 110 is an interference source (single station interference). For example, in a case where it is necessary to consider aggregated interference from a plurality of the communication devices 110 at the same time, a correction value may be added. Specifically, for example, the correction value can be determined on the basis of three (Fixed/Predetermined, Flexible, Flexible Minimized) interference margin distribution schemes disclosed in ECC Report 186.

Note that the allowable interference power information itself is not necessarily directly available as in Formula 2. For example, in a case where a required signal power-to-interference power ratio (SIR) of the primary system, a signal to interference plus noise ratio (SINR), and the like are available, they may be converted into allowable interference power and used. Note that such conversion processing is not limited to this processing, and may be applied to processing of other procedures.

Note that Formula 2 is expressed using logarithms, but as a matter of course, may be used by being converted into antilogarithms at the time of implementation. Furthermore, all parameters in logarithmic notation described in the present disclosure may be used by being appropriately converted into antilogarithms.

Furthermore, in a case where the above-described transmission power information is included in the query requirement information, the available spectrum can be evaluated by a method different from the above-described method. Specifically, for example, in a case where it is assumed that desired transmission power indicated by transmission power information is used, when an estimated interfering amount is less than allowable interference power in the primary system or the protection zone thereof, the frequency channel is determined as available, and is provided in notification to the communication device 110.

Furthermore, for example, in a case where an area or a space in which the communication device 110 can use the frequency band is determined in advance as in an area of a radio environment map (REM), the available spectrum information may be simply derived on the basis of only coordinates (coordinates or latitude, longitude, and ground level of x-axis, y-axis, and z-axis of communication device 110) included in the position information of the communication device 110. Furthermore, for example, even in a case where a lookup table that associates coordinates of a position of the communication device 110 with available spectrum information is prepared, the available spectrum information described above may be derived on the basis of only the position information of the communication device 110. In this manner, there are various methods for the method of determining the available spectrum, and it is not limited to the example of the present disclosure.

Furthermore, in a case where the communication control device 130 acquires information regarding capability of a band extension technology such as carrier aggregation (CA) or channel bonding as the frequency band information supported by the communication device 110, the communication control device 130 may include an available combination, a recommended combination, or the like thereof in the available spectrum information.

Furthermore, in a case where the communication control device 130 acquires information regarding a combination of frequency bands supported by the dual connectivity and the multi connectivity as the frequency band information supported by the communication device 110, the communication control device 130 may include information such as an available spectrum and a recommended spectrum in the available spectrum information for the dual connectivity and the multi connectivity.

Furthermore, in a case where the available spectrum information is provided for the band extension technology as described above, when imbalance of the maximum allowed transmission power occurs among a plurality of frequency channels, the available spectrum information may be provided after adjusting the maximum allowed transmission power of each frequency channel. For example, from a perspective of primary system protection, the maximum allowed transmission power of each frequency channel may be aligned with the maximum allowed transmission power of a frequency channel having a low maximum allowed power spectral density (PSD)).

The evaluation of the available spectrum does not necessarily need to be performed after the query request is received. For example, after normal completion of the above-described registration procedure, the communication control device 130 may independently perform the procedure without a query request. In such a case, an REM, a lookup table, or an information table similar to those described above as an example may be created.

Furthermore, the radio wave use priority such as PAL or GAA may also be evaluated. For example, in a case where the registered device parameters or the query requirements include information regarding the priority of radio wave use, it may be determined whether or not it is possible to use a spectrum on the basis of the priority, and the notification may be made. Furthermore, for example, as disclosed in Non-Patent Document 3, in a case where information (referred to as a cluster list in Non-Patent Document 3) regarding the communication device 110 that performs high priority use (for example, PAL) from the user is registered in the communication control device 130 in advance, evaluation may be performed on the basis of the information.

After the evaluation of the available spectrum is completed, the communication control device 130 notifies the communication device 110 of the evaluation result.

The communication device 110 may select desired communication parameters by using the evaluation result received from the communication control device 130. In a case where a spectrum grant procedure (to be described later) is not employed, the communication device 110 may start radio wave transmission using the selected desired communication parameters as communication parameters.

<2.3 Spectrum Grant Procedure>

The spectrum grant procedure is a procedure for the wireless system that intends to use the frequency band to receive the secondary use permission of the spectrum from the communication control device 130. The communication device 110 that performs the spectrum grant procedure as a representative of the wireless system may be the same as or different from the communication device 110 that has performed the procedures so far. Typically, the communication device 110 notifies the communication control device 130 of a spectrum grant request including information that can specify the communication device 110, thereby starting the procedure. Note that, as described above, the available spectrum query procedure is not essential. Therefore, the spectrum grant procedure is performed next to the available spectrum query procedure in some cases, or is performed next to the registration procedure in other cases.

In the present embodiment, it is assumed that at least the following two types of spectrum grant request schemes can be used.

- Designation scheme
- Flexible scheme

The designation scheme is a request scheme in which the communication device 110 designates desired communication parameters and requests the communication control device 130 to permit operation based on the desired communication parameters. The desired communication parameters include, but are not particularly limited to, a frequency channel to be used, a maximum transmission power, and the like. For example, a wireless interface technology specific parameter (such as a modulation scheme or a duplex mode) may be designated. Furthermore, information indicating radio wave use priority such as PAL and GAA may be included.

The flexible scheme is a request scheme in which the communication device 110 designates only a requirement regarding communication parameters and requests the communication control device 130 to designate communication parameters that can be permitted for secondary use while satisfying the requirement. Examples of the requirement related to the communication parameters include, but are not particularly limited to, a bandwidth, a desired maximum transmission power, or a desired minimum transmission power, and the like. For example, a wireless interface technology specific parameter (such as a modulation scheme or a duplex mode) may be designated. Specifically, for example, one or more TDD frame structures may be selected in advance and provided in notification.

Similarly to the query request, the spectrum grant request may also include the measurement report in any scheme of the designation scheme and the flexible scheme. The measurement report includes results of measurement performed by the communication device 110 and/or the terminal 120. The measurement may be represented by raw data or processed data. For example, standardized metrics represented by reference signal received power (RSRP), reference signal strength indicator (RSSI), and reference signal received quality (RSRQ) can be used for measurement.

Note that information regarding a scheme to be used by the communication device 110 may be registered in the communication control device 130 at the time of the registration procedure described in <2.1>.

<2.3.1 Details of spectrum grant processing>

After receiving the spectrum grant request, the communication control device 130 performs spectrum grant processing on the basis of the spectrum grant request scheme. For example, using the technique described in <2.2>, it is possible to perform the spectrum grant processing in consideration of the primary system, the secondary use prohibited area, the existence of the communication device 110 in the vicinity, and the like.

In a case where the flexible scheme is used, the maximum allowed transmission power information may be derived using the technique described in <2.2.2>. Typically, the maximum allowed transmission power information is calculated by using allowable interference power information in the primary system or a protection zone thereof, position information of the reference point for calculating an interference power level suffered by the primary system, registration information of the communication device 110, and a propagation loss estimation model. Specifically, as an example, it is calculated by Formula 2 described above.

Furthermore, as described above, Formula 2 is described on the basis of the assumption that the single communication device 110 is the interference source. For example, in a case where it is necessary to consider aggregated interference from a plurality of the communication devices 110 at the same time, a correction value may be added. Specifically, for example, the correction value can be determined on the basis of three types of schemes (Fixed/Predetermined, Flexible, Flexible Minimized) disclosed in ECC Report 186.

The communication control device 130 can use various propagation loss estimation models in the spectrum grant procedure, available spectrum evaluation processing for an available spectrum information query request, and the like. In a case where a model is designated for each application, it is desirable to use the designated model. For example, in Non-Patent Document 3 (WINNF-TS-0112), a propagation loss model such as Extended Hata (eHATA) or Irregular Terrain Model (ITM) is employed for each application. Of course, the propagation loss model is not limited thereto.

There are also propagation loss estimation models that require information regarding radio wave propagation paths. The information regarding the radio wave propagation path can include, for example, information indicating inside and outside of a line of sight (Line of Sight (LOS) and/or Non Line of Sight (NLOS)), topographical information (undulations, sea levels, and the like), environmental information (Urban, Suburban, Rural, Open, Sky, and the like), and the like. When using a propagation loss estimation model, the communication control device 130 may estimate these pieces of information from the registration information of the communication device 110 or the information of the primary system that is already acquired. Alternatively, in a case where there is a parameter designated in advance, it is desirable to use the parameter.

In a case where no propagation loss estimation model is designated in a predetermined application, a model is selectively used as necessary. For example, the selective use becomes possible by using a model that is calculated with a small loss such as a free space loss model when estimating interfering power with respect to another communication device 110, and using a model that is calculated with a large loss when estimating the coverage of the communication device 110.

Furthermore, in a case where the designated propagation loss estimation model is used, as an example, the spectrum grant processing can be performed by evaluating an interfering risk. Specifically, for example, in a case where it is assumed that desired transmission power indicated by transmission power information is used, when an estimated interfering amount is less than allowable interference power in the primary system or the protection zone thereof, it is determined that the use of the frequency channel can be permitted, and the communication device 110 is notified of such a fact.

In any technique of the designation scheme and the flexible scheme, the radio wave use priority such as PAL or GAA may also be evaluated similarly to the query request. For example, in a case where the registered device parameters or the query requirements include information regarding the radio wave use priority, it may be determined whether or not it is possible to use a spectrum on the basis of the priority, and the notification may be made. Furthermore, for example, in a case where information regarding the communication device 110 that performs high priority use (for example, PAL) from the user is registered in the communication control device 130 in advance, evaluation may be performed on the basis of the information. For example, in WINNF-TS-0112, information regarding the communication device 110 is referred to as a cluster list.

Furthermore, in any calculation described above, the spectrum availability may be determined by performing correction of the position information or the coverage by using the positioning accuracy information (location uncertainty) when the position information of the communication device is used.

The spectrum grant processing is not necessarily performed due to reception of the spectrum grant request. For example, after the normal completion of the above-described registration procedure, the communication control device 130 may independently perform without the spectrum grant request. Furthermore, for example, the spectrum grant processing may be performed at regular intervals. In such a case, the above-described REM, a lookup table, or information tables similar thereto may be created. Therefore, the spectrum that can be permitted is determined only by the position information, and thus, the communication control device 130 can quickly return a response after receiving the spectrum grant request.

<2.4 Spectrum Use Notification/Heartbeat>

Spectrum use notification is a procedure in which the wireless system using the frequency band notifies the communication control device 130 of the use of the spectrum based on the communication parameters allowed to be used in the spectrum grant procedure. The communication device 110 that performs the spectrum use notification as a representative of the wireless system may be the same as or different from the communication device 110 that has performed the procedures so far. Typically, the communication device 110 notifies the communication control device 130 of a notification message including information that can specify the communication device 110.

The spectrum use notification is desirably performed periodically until the use of the spectrum is rejected from the communication control device 130. In that case, the spectrum use notification is also referred to as a heartbeat.

After receiving the spectrum use notification, the communication control device 130 may determine whether to start or continue the spectrum use (in other words, radio wave transmission at the permitted spectrum). Examples of the determination method include confirmation of the spectrum use information of the primary system. Specifically, it is possible to determine permission or rejection of start or continuation of the spectrum use (radio wave transmission at the permitted spectrum) on the basis of a change in the use spectrum of the primary system, a change in a spectrum use situation of the primary system in which the use of radio waves is not steady (for example, a ship radar of CBRS in the United States), and the like. If the start or continuation is permitted, the communication device 110 may start or continue the spectrum use (radio wave transmission at the permitted spectrum).

After receiving the spectrum use notification, the communication control device 130 may command reconfiguration of communication parameters to the communication device 110. Typically, the reconfiguration of communication parameters can be commanded in a response of the communication control device 130 to the spectrum use notification. For example, information regarding recommended communication parameters (hereinafter, recommended communication parameter information) can be provided. The communication device 110 to which the recommended communication parameter information has been provided desirably performs the spectrum grant procedure described in <2.4> again using the recommended communication parameter information.

<2.5 Supplement of Various Procedures>

The various procedures described above do not necessarily need to be implemented individually, as described below. For example, two different procedures may be implemented by substituting a third procedure having roles of the two different procedures. Specifically, for example, the registration request and the available spectrum information query request may be integrally provided in notification. Furthermore, for example, the spectrum grant procedure and the spectrum use notification may be integrally performed. As a matter of course, it is not limited to these combinations, and three or more procedures may be performed integrally. Furthermore, as described above, one procedure may be separately performed a plurality of times.

Furthermore, the expression "acquisition" or an expression equivalent thereto in the present disclosure does not necessarily mean acquisition according to the procedure described in the present disclosure. For example, although it is described that the position information of the communication device 110 is used in the available spectrum evaluation processing, the information acquired in the registration procedure does not necessarily need to be used, and in a case where position information is included in an available spectrum query procedure request, this position information may be used. In other words, the procedure for acquisition described in the present disclosure is an example, and acquisition by other procedures is also permitted within the scope of the present disclosure and within the scope of technical feasibility.

Furthermore, the information described to be included in the response from the communication control device 130 to the communication device 110 may be actively provided in notification from the communication control device 130 by a push scheme if possible. As a specific example, the available spectrum information, the recommended communication parameter information, a radio wave transmission continuation rejection notification, and the like may be provided in notification by the push scheme.

<2.6 Various Procedures for Terminal>

So far, the description has been made mainly assuming the processing in the communication device 110A. However, in some embodiments, not only the communication device 110A but also the terminal 120 and the communication device 110B can operate under management of the communication control device 130. That is, a scenario in which the communication parameters are determined by the communication control device 130 is assumed. Even in such a case, basically, the respective procedures described in <2.1> to <2.4> can be used. However, unlike the communication device 110A, the terminal 120 and the communication device 110B need to use the spectrum managed by the communication control device 130 for the backhaul link, and cannot perform radio wave transmission without permission. Therefore, it is desirable to start backhaul communication for the purpose of accessing the communication control device 130 only after detecting a radio wave or an authorization signal transmitted by the communication device 110A (communication device 110 capable of providing wireless communication service or the communication device 110 as a master in a master-secondary system).

On the other hand, under the management of the communication control device 130, there may be cases where, also in the terminal or the communication device 110B, an allowable communication parameter is set for the purpose of protecting the primary system. However, the communication control device 130 cannot know the position information and the like of these devices in advance. Furthermore, these devices are also likely to have mobility. That is, the position information is dynamically updated. Depending on the laws, in a case where the position information changes by a certain amount or more, re-registration to the communication control device 130 may be required in some cases.

In consideration of such various use forms, operation forms, and the like of the terminal 120 and the communication device 110, in the operation form of the TVWS (Non-Patent Document 5) defined by the Office of Communications (Ofcom), the following two types of communication parameters are defined.

- Generic operational parameters

- Specific operational parameters

The generic operational parameters are communication parameters defined as "parameters that can be used by any slave WSD located within the coverage area of a predetermined master WSD (corresponding to the communication device 110)" in Non-Patent Document 5. A feature is that it is calculated by a WSDB without using the position information of the slave WSD.

The generic operational parameters can be provided by unicast or broadcast from the communication device 110 that is already permitted to perform radio wave transmission from the communication control device 130. For example, a broadcast signal represented by a contact verification signal (CVS) defined in Part 15 Subpart H of the FCC rule in the United States can be used. Alternatively, it may be provided by a broadcast signal specific to a wireless interface. Therefore, the terminal 120 and the communication device 110B can be handled as the communication parameters used for radio wave transmission for the purpose of accessing the communication control device 130.

The specific operational parameters are communication parameters defined as "parameters that can be used by a specific slave white space device (WSD)" in Non-Patent Document 5. In other words, they are communication parameters calculated using device parameters of the slave WSD corresponding to the terminal 120. A feature is that it is calculated by a white space database (WSDB) using the position information of the slave WSD.

The CPE-CBSD Handshake Procedure defined in Non-Patent Document 6 can be regarded as another form of the procedure related to the terminal. The CPE-CBSD does not have a wired backhaul line and accesses the Internet via the BTS-CBSD. Therefore, permission for radio wave transmission in the CBRS band cannot be acquired from a SAS without a special regulation or procedure. The CPE-CBSD Handshake Procedure allows the CPE-CBSD to perform radio wave transmission at the same maximum EIRP and the minimum necessary duty cycle as those of a terminal (EUD) until permission for radio wave transmission is acquired from the SAS. Accordingly, the communication device 110B can construct a line for acquiring permission for radio wave transmission from the communication control device 130 by setting the transmission EIRP to the maximum EIRP of the terminal and then performing wireless communication with the communication device 110A at the minimum necessary duty cycle. After the permission for the radio wave transmission is acquired, it is possible to use up to the maximum EIRP defined by the communication device within the range of the permission.

<2.7 Procedure Occurring Between Communication Control Devices>

<2.7.1 Information Exchange>

The communication control device 130 can exchange management information with another communication control device 130. At least the following information is desirably exchanged.

- Information related to communication device 110
- Area information
- Protection target system information

The information related to the communication device 110 includes at least the registration information and the communication parameter information of the communication device 110 operating under permission of the communication control device 130. The registration information of the communication device 110 having no permitted communication parameter may be included.

The registration information of the communication device 110 is typically the device parameters of the communication control device 130 registered in the communication device 110 in the above-described registration procedure. Not all of the registered information is necessarily exchanged. For example, information that may correspond to personal information does not need to be exchanged. Furthermore, when the registration information of the communication device 110 is exchanged, the registration information may be encrypted and exchanged, or the information may be exchanged after the content of the registration information is made obfuscated. For example, information converted into a binary value or information signed using an electronic signature mechanism may be exchanged.

The communication parameter information of the communication device 110 is typically information related to the communication parameters currently used by the communication device 110. At least information indicating the use spectrum and the transmission power is desirably included. Other communication parameters may be included.

The area information is typically information indicating a predetermined geographical region. This information can include region information of various attributes in various modes.

For example, as in a PAL protection area (PPA) disclosed in WINNF-TS-0112, protection zone information of the communication device 110 serving as a high priority secondary system may be included in the area information. The area information in this case can be expressed by, for example, a set of three or more coordinates indicating a geographical position. Furthermore, for example, in a case where a plurality of the communication control devices 130 can refer to a common external database, the area information is expressed by a unique ID, and the actual geographical region can be referred to from the external database using the ID.

Furthermore, for example, information indicating the coverage of the communication device 110 may be included. The area information in this case can also be expressed by, for example, a set of three or more coordinates indicating a geographical position. Furthermore, for example, assuming that the coverage is a circle centered on the geographical position of the communication device 110, the coverage can also be expressed by information indicating a size of a radius. Furthermore, for example, in a case where a plurality of the communication control devices 130 can refer to a common external database that records area information, the information indicating the coverage is expressed by a unique ID, and the actual coverage can be referred to from the external database using the ID.

Furthermore, as another aspect, information related to an area section determined in advance by the government or the like can also be included. Specifically, for example, it is possible to indicate a certain region by indicating an address. Furthermore, for example, a license area or the like can be similarly expressed.

Furthermore, as still another aspect, the area information does not necessarily express a planar area, and may express a three-dimensional space. For example, it may be expressed using a spatial coordinate system. Furthermore, for example, information indicating a predetermined closed space such as a floor number, a floor, and a room number of a building may be used.

The protection target system information is, for example, information of a wireless system treated as a protection target, such as the aforementioned existing layer (incumbent tier). Examples of the situation in which this information needs to be exchanged include a situation in which cross-border coordination is required. It is well conceivable that different protection targets exist in the same band between neighboring countries or regions. In such a case, the protection target system information can be exchanged between different communication control devices 130 in different countries or regions to which the communication control devices belong as necessary.

As another aspect, the protection target system information may include information of a secondary licensee and information of the wireless system operated by the secondary licensee. The secondary licensee is specifically a lessee of the license, and for example, it is assumed that the secondary licensee borrows PAL from the holder and operates the wireless system owned by itself. In a case where the communication control device 130 performs the rent management independently, information of the secondary licensee and information of the wireless system operated by the secondary licensee can be exchanged with another communication control device for the purpose of protection.

These pieces of information can be exchanged between the communication control devices 130 regardless of the decision-making topology applied to the communication control device 130.

Furthermore, these pieces of information can be exchanged in various schemes. Examples thereof will be described below.

- ID designation scheme
- Period designation scheme
- Region designation scheme
- Dump scheme

The ID designation scheme is a scheme in which an ID, given in advance to specify information managed by the communication control device 130, is used to acquire information corresponding to the ID. For example, it is assumed that the first communication control device 130 manages the communication device 110 with ID: AAA. At this time, the second communication control device 130 designates ID: AAA to the first communication control device 130 and makes an information acquisition request. After receiving the request, the first communication control device 130 searches for information of ID: AAA, and provides notification of information regarding the communication device 110 with ID: AAA, for example, registration information, communication parameter information, and the like as a response.

The period designation scheme is a scheme in which information satisfying a predetermined condition can be exchanged in a designated specific period.

Examples of the predetermined condition include the presence or absence of information update. For example, in a case where acquisition of information regarding the communication device 110 in the specific period is designated by a request, the registration information of the communication device 110 newly registered within the specific period can be provided in notification as a response. Furthermore, the registration information or the information of communication parameters of the communication device 110 whose communication parameters have been changed within the specific period can also be provided in notification as a response.

Examples of the predetermined condition include whether or not being recorded by the communication control device 130. For example, in a case where acquisition of information regarding the communication device 110 in the specific period is designated by a request, the registration information or the information of the communication parameters recorded by the communication control device 130 in the period can be provided in notification as a response. In a case where the information is updated in the period, the latest information in the period can be provided in notification. Alternatively, an update history for each piece of the information may be provided in notification.

In the region designation scheme, a specific region is designated, and information of the communication device 110 belonging to the region is exchanged. For example, in a case where acquisition of information regarding the communication device 110 in the specific region is designated by a request, the registration information or the information of the communication parameters of the communication device 110 installed in the region can be provided in notification as a response.

The dump scheme is a scheme of providing the entire information recorded by the communication control device 130. At least the information related to the communication device 110 and the area information are desirably provided by the dump scheme.

The above description of the information exchange between the communication control devices 130 is all based on a pull scheme. That is, a form in which information corresponding to a parameter designated in a request is responded is adopted, and as an example, implementation by the HTTP GET method is possible. However, information may be actively provided to another communication control device 130 by a push scheme without being limited to the pull scheme. As an example, the push scheme can be implemented by the HTTP POST method.

<2.7.2 Command or Request Procedure>

The communication control devices 130 may give a command or a request with each other. Specifically, as an example, there is reconfiguration of communication parameters of the communication device 110. For example, in a case where it is determined that the first communication device 110 managed by the first communication control device 130 is greatly interfered with the second communication device 110 managed by the second communication control device 130, the first communication control device 130 may request the second communication control device 130 to change communication parameters of the second communication device 110.

As another example, there is reconfiguration of the area information. For example, in a case where calculation of coverage information and protection zone information regarding the second communication control device 130 managed by the second communication device 110 is incomplete, the first communication control device 130 may request the second communication control device 130 to reconfigure the area information. Besides this, an area information reconfiguration request may be made for various reasons.

<2.8 Information Transmission Means>

A notification (signaling) between entities described so far can be implemented via various media. E-UTRA or 5G NR will be described as an example. As a matter of course, the present embodiment is not limited thereto at the time of implementation.

<2.8.1 Signaling between Communication Control Device 130 and Communication Device 110>

The notification from the communication device 110 to the communication control device 130 may be performed, for example, in an application layer. For example, the Hyper Text Transfer Protocol (HTTP) may be used. Signaling can be performed by describing required parameters in a message body of the HTTP according to a predetermined manner. Moreover, in a case where the HTTP is used, the notification from the communication control device 130 to the communication device 110 is also performed according to an HTTP response mechanism.

<2.8.2 Signaling between Communication Device 110 and Terminal 120>

The notification from the communication device 110 to the terminal 120 may be performed using, for example, at least one of radio resource control (RRC) signaling, system information (SI), or downlink control information (DCI). Furthermore, examples of a downlink physical channel include a physical downlink control channel (PDCCH), a physical downlink shared channel (PDSCH), a physical broadcast channel (PBCH), an NR-PDCCH, an NR-PDSCH, an NR-PBCH, and the like, but the downlink physical channel may be implemented using at least one of these.

The notification from the terminal 120 to the communication device 110 may be performed using, for example, radio resource control (RRC) signaling or uplink control information (UCI). Furthermore, it may be implemented by using an uplink physical channel (a physical uplink control channel (PUCCH), a physical uplink shared channel (PUSCH), or a physical random access channel (PRACH)).

The signaling is not limited to the above-described physical layer signaling, and the signaling may be performed at a higher layer. For example, at the time of implementation at the application layer, the signaling may be implemented by describing a required parameter in a message body of the HTTP according to a predetermined manner.

<2.8.3 Signaling between Terminals 120>

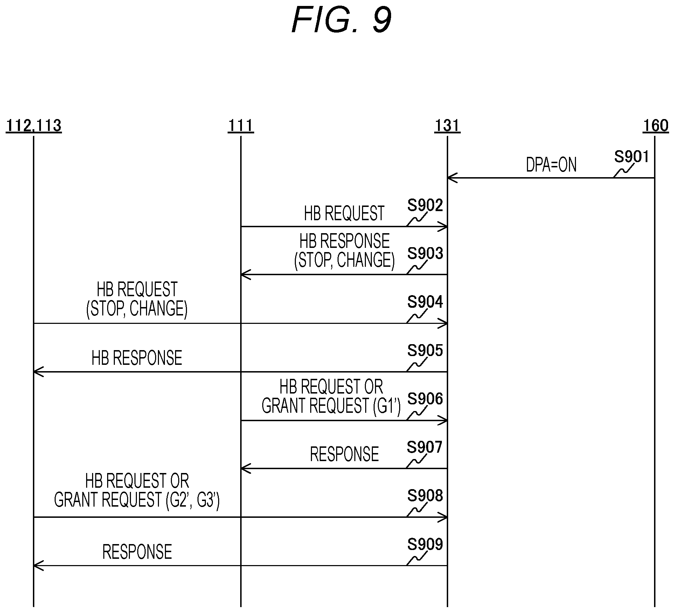

Fig. 9 illustrates an example of a flow of signaling in a case where device-to-device (D2D) or vehicle-to-everything (V2X), which is communication between the terminals 120, is assumed as communication of the secondary system. The D2D or V2X which is communication between the terminals 120 may be performed using a physical sidelink channel (a physical sidelink control channel (PSCCH), a physical sidelink shared channel (PSSCH), or a physical sidelink broadcast channel (PSBCH)). The communication control device 130 calculates a communication parameter that needs to be used by the secondary system (T101) and notifies the communication device 110 of the secondary system of the calculated communication parameter (T102). A value of the communication parameter may be determined and provided in notification, or a condition indicating a range or the like of the communication parameter may be determined and provided in notification. The communication device 110 acquires the communication parameter that needs to be used by the secondary system (T103), and sets the communication parameter that needs to be used by the own communication device 110 (T104). Then, the terminal 120 is notified of a communication parameter that needs to be used by the terminal 120 subordinate to the communication device 110 (T105). Each of the terminals 120 subordinate to the communication device 110 acquires (T106) and sets (T107) the communication parameter that needs to be used by the terminal 120. Then, communication with another terminal 120 of the secondary system is performed (T108).

A communication parameter in a case where a target frequency channel for spectrum sharing is used in the sidelink (direct communication between the terminals 120) may be provided in notification, acquired, or set in a form associated with a resource pool for the sidelink in the target frequency channel. The resource pool is a radio resource for a sidelink set by a specific frequency resource or time resource. Examples of the frequency resource include a resource block, a component carrier, and the like. The time resource includes, for example, a radio frame, a subframe, a slot, a mini-slot, and the like. In a case where the resource pool is set in a frequency channel to be subjected to the spectrum access, the resource pool is set in the terminal 120 by the communication device 110 on the basis of at least one of the RRC signaling, the system information, or the downlink control information. Then, a communication parameter that needs to be applied in the resource pool and the sidelink is also set in the terminal 120 by the communication device 110 on the basis of at least one of the RRC signaling, the system information, or the downlink control information from the communication device 110 to the terminal 120. The notification of setting of the resource pool and the notification of the communication parameter that needs to be used in the sidelink may be performed simultaneously or individually.

<<3. Examples of Present Invention>>

In the following description, a term "primary channel" is a frequency channel allocated to a base station in a cluster that performs co-channel operation on the basis of PALs, and a term "secondary channel" is a backup channel for PAL continuous operation. In the implementation, different terms having similar meanings may be used.

Furthermore, DPA = ON means a transition to a situation in which the existence of a ship-based radar wave in the DPA is notified from the ESC and radio wave transmission associated with a spectrum grant stored in the DPA Move List needs to be stopped. After receiving a heartbeat request from the CBSD after DPA = ON, the SAS checks whether or not a grant associated with the heartbeat is stored in the DPA Move List, and performs notification, in a heartbeat response, of a response code indicating the normal completion in a case where the grant is not stored or a response code instructing the stop of the radio wave transmission in a case where the grant is not stored. In a case where the response code instructing the stop of the radio wave transmission is included in the heartbeat response, the SAS can notify recommended operation parameters. The recommended operation parameters include information indicating a frequency channel and transmission power, and the CBSD can newly acquire a spectrum grant using the information. This operation corresponds to "channel change" in the related art. When DPA = OFF, it is possible to resume the radio wave transmission associated with the spectrum grant stored in the DPA Move List again.

<First Example>

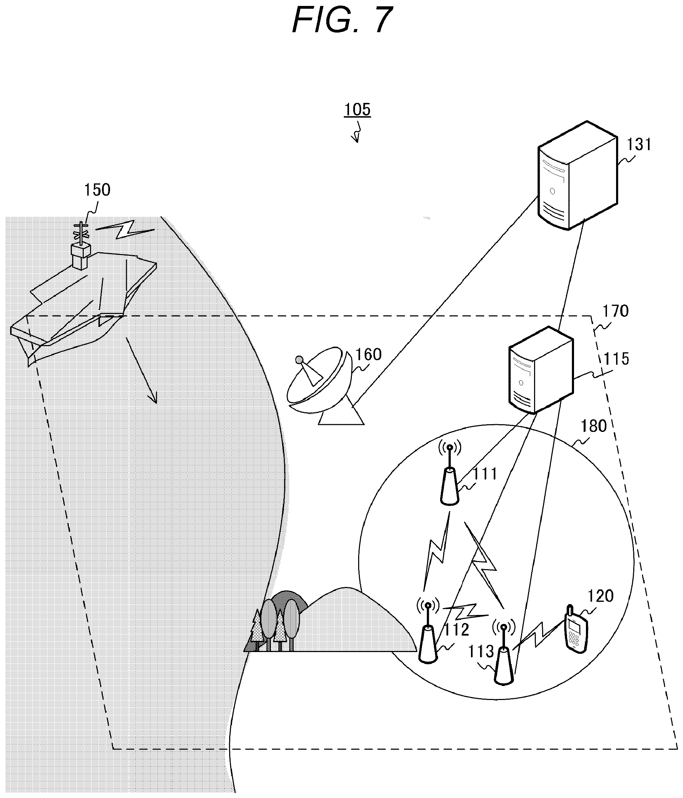

Fig. 7 is a diagram illustrating an example of a communication system 105 according to a first example of the embodiment of the present technology. The communication system 105 includes an ESC 160, a communication control device 131, an intermediate entity 115, base stations 111 to 113, and a predetermined number of terminals 120. Among these, physical positions of the base stations 111 to 113 are all inside a DPA 170. Positions of nodes (the communication control device 131 and the like) other than the base stations 111 to 113 may be either inside or outside the DPA 170. The communication control device 131 in the drawing is an example of the communication control device 130 in Fig. 1, and the base stations 111 to 113 are examples of the communication device 110A in Fig. 1. The intermediate entity 115 is an example of the intermediate device 110C in Fig. 1.

The DPA 170 is set in the vicinity of a coastline, and a gray portion in the drawing indicates a sea area and a white portion indicates land. A boundary between them corresponds to the coastline. A wireless communication device 150 of an existing user in the CBRS sometimes approaches the coastline in the DPA 170. As the wireless communication device 150, for example, a ship-based radar is assumed.

The communication control device 131 is a device having a function of the SAS. The intermediate entity 115 is a device that relays communication between the communication control device 131 and the base stations 111 to 113. As the intermediate entity 115, a network entity such as a domain proxy or an element management system (EMS) is assumed. Note that the communication control device 131 and the intermediate entity 115 are examples of an information processing device described in the claims.

Each of the base stations 111 to 113 has a grant for secondarily using the primary channel primarily used by the wireless communication device 150. The grants for the primary channel of the base stations 111, 112, and 113 will be denoted by G1, G2, and G3, respectively. Furthermore, the base stations 111 to 113 are members in a CBRS cluster. This CBRS cluster is a group that can wirelessly communicate with each other using the same frequency channel. These base stations 111 to 113 can also wirelessly communicate with the predetermined number of terminals 120 using the primary channel.

Furthermore, it is assumed that the base stations 111 to 113 can communicate with the intermediate entity 115 in a wired manner. Meanwhile, communication between nodes other than the communication between the base stations 111 to 113 and the intermediate entity 115 may be either wireless or wired.

Here, it is assumed that there is a possibility of interference with radio waves of the wireless communication device 150 if the base station 111 continues wireless communication using the primary channel in a case where DPA = ON. Therefore, it is assumed that the grant G1 of the base station 111 is registered in the DPA Move List. Whether or not there is a possibility of interference is determined by the SAS on the basis of a geographical situation around the base station 111, communication parameters, and the like.

On the other hand, it is assumed that the base stations 112 and 113 do not cause interference even if continuing wireless communication using the primary channel when DPA = ON due to a geographical situation such as the existence of an obstacle (for example, a mountain or a building) around the base stations. Therefore, it is assumed that the grants G2 and G3 of the base stations 112 and 113 are not registered in the DPA Move List.

Note that the base station 111 is an example of a first base station described in the claims, and the base stations 112 and 113 are examples of a second base station described in the claims. Furthermore, the number of base stations whose grants are registered in the DPA Move List is not limited to one, and may be two or more. The number of base stations whose grants are not registered in the DPA Move List only need to be one or more, and is not limited to two.

When detecting the radio waves of the wireless communication device 150, the ESC 160 notifies the communication control device 131 of DPA = ON. The communication control device 131 (SAS) refers to the DPA Move List and instructs the base station 111 whose grant is registered in the list to stop the radio wave transmission. Furthermore, the communication control device 131 requests the base stations 112 and 113 whose grants are not registered in the DPA Move List to change the frequency channel via the intermediate entity 115.

In a case where the change of the frequency channel is requested by the communication control device 131, the intermediate entity 115 determines whether or not to change the frequency channels of the base stations 112 and 113 from the primary channel to the secondary channel. Then, in a case where it is determined to change the frequency channel, the intermediate entity 115 waits until an appropriate timing, notifies the communication control device 131 that the frequency is to be changed at such a timing, and changes the frequency channels of the base stations 111 to 113. Note that the primary channel is an example of a first frequency channel described in the claims, and the secondary channel is an example of a second frequency channel described in the claims.

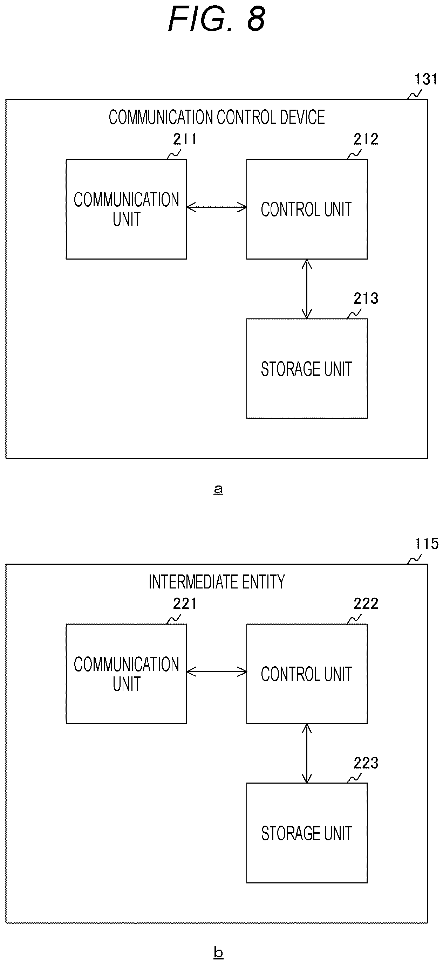

Fig. 8 is a block diagram illustrating a configuration example of the communication control device 131 and the intermediate entity 115 in the first example of the embodiment of the present technology. In the drawing, a is a block diagram of the communication control device 131, and b in the drawing is a block diagram of the intermediate entity 115.

The communication control device 131 includes a communication unit 211, a control unit 212, and a storage unit 213. The communication unit 211 performs communication with the ESC 160 and the intermediate entity 115. The control unit 212 performs various types of control related to the stop of the radio wave transmission and the change of the frequency channel. The storage unit 213 holds information (such as the DPA Move List and the communication parameters) necessary for the control of the control unit 212.

The intermediate entity 115 includes a communication unit 221, a control unit 222, and a storage unit 223. The communication unit 221 performs communication with the communication control device 131 and the base stations 111 to 113. The control unit 222 performs various types of control related to the stop of the radio wave transmission and the change of the frequency channel. The storage unit 223 holds information (such as the DPA Move List and the communication parameters) necessary for the control of the control unit 222.

Here, a configuration in which the intermediate entity 115 does not determine whether or not to change the frequency channels of the base stations 112 and 113 when DPA = ON is assumed as a comparative example.

Fig. 9 is a sequence diagram illustrating an example of a frequency channel change process according to the comparative example. In the drawing, the intermediate entity 115 is omitted.

It is assumed that the ESC 160 notifies the communication control device 131 (SAS) of DPA = ON (step S901). The communication control device 131 gives an instruction to stop the radio wave transmission and perform the change to the secondary channel in a response to a heartbeat request (step S902) from the base station 111 on the basis of the DPA Move List (step S903).

Although nothing is included in the DPA Move List regarding the base stations 112 and 113, in the case of the PAL operation, it is necessary to perform the operation using the same frequency channel as the base station 111. Therefore, the communication control device 131 gives an instruction to stop the radio wave transmission and perform the change to the secondary channel in a response to a heartbeat request (step S904) from the base stations 112 and 113 (step S905).

The base station 111 transmits a heartbeat request or a grant request that requests the communication control device 131 for a new grant G1' in order to use the secondary channel (step S906), and the communication control device 131 returns a response to the request (step S907). These steps S906 and S907 are repeated until the new grant G1' is acquired.

Furthermore, the base stations 112 and 113 also transmit a heartbeat request or a grant request for requesting the communication control device 131 for new grants G2' and G3' in order to use the secondary channel (step S908). The communication control device 131 returns a response to the request (step S909). These steps S908 and S909 are repeated until the new grants G2' and G3' are acquired.

Furthermore, a timing of the heartbeat request from the base station 111 and a timing of the heartbeat request from the base stations 112 and 113 appear to be different in the drawing, but this is for convenience of description, and both the timings may be the same in practice. For example, the heartbeat request (step S902) from the base station 111 and the heartbeat request (step S904) from the base stations 112 and 113 may be transmitted at the same timing. Furthermore, transmission timings may be different similarly to the description. This similarly applies to the subsequent sequence diagrams.

In the comparative example illustrated in the drawing, the following problems occur.

Regarding Problem (1), first, in the base station 111, there is a possibility that available maximum transmission power becomes larger if GAA operation is performed on still another frequency channel than that at the time of continuing the PAL operation using the secondary channel.

Next, regarding Problem (2), there is a possibility that the base stations 112 and 113 have resistance to immediately change the channel. For example, from the viewpoint of service continuity, a state in which the handover of all serving UEs is not completed or a state in which it is desired not to perform the handover is assumed. More specifically, a case is assumed in which a user makes heavy use. Furthermore, depending on models, the base station sometimes requires restart for frequency switching, and may become unusable for several minutes.

Moreover, regarding Problem (3), due to the current SAS mechanism, it is not specified that the SAS transmits the necessity of the channel change to the base stations 112 and 113. Therefore, the base stations 112 and 113 continue to use the primary channel as it is. It is unknown when the ESC 160 performs the notification of DPA = OFF, and thus, the base station 111 is isolated all the time.

In view of Problems (1) to (3) described above, it is considered that it is preferable in many cases in the entire system not to perform the change to the secondary channel when DPA = ON.

As solutions to these problems, the following three solutions are conceivable.

First, as Solution (1), the grant G1 of the base station 111 is suspended or terminated to acquire a grant again so as to perform the GAA operation in a frequency channel other than the secondary channel.

Next, as Solution (2), after the SAS also notifies the base stations 112 and 113 of the channel change instruction, whether or not to perform the channel change is comprehensively determined on the CBSD side.

Moreover, as Solution (3), in a case where it is determined to perform the channel change in Solution (2), a change timing is transmitted from the CBSD side to the SAS.

Among the three solutions, Solutions (2) and (3) are adopted in the first example. The remaining Solution (1) will be described later.

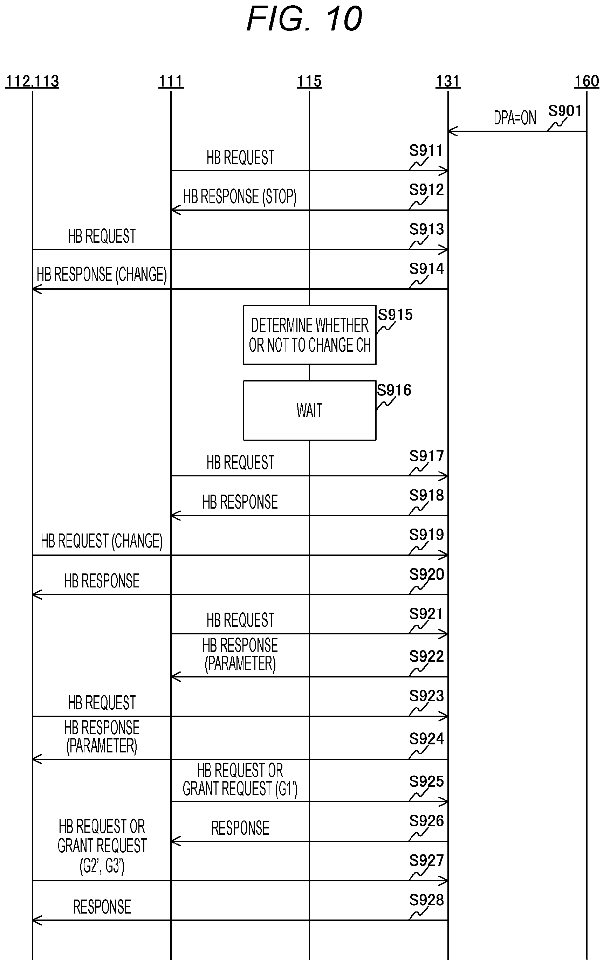

Fig. 10 is a sequence diagram illustrating an example of a frequency channel change process according to the first example of the embodiment of the present technology.

It is assumed that the ESC 160 notifies the communication control device 131 (SAS) of DPA = ON (step S901). The communication control device 131 gives an instruction to stop the radio wave transmission in a response to a heartbeat request (step S911) from the base station 111 on the basis of the DPA Move List (step S912). However, the communication control device 131 does not perform notification of recommended operation parameters for grant acquisition in step S912 in order to prevent an immediate transition to the secondary channel.

Furthermore, the communication control device 131 requests the change to the secondary channel in a response to a heartbeat request (step S913) from the base stations 112 and 113 (step S914). In step S914, the communication control device 131 may calculate maximum transmission power considered to be allowable in the secondary channel and notify the base station 112 or the like of this together.

In the drawing, it is assumed that the intermediate entity 115 relays the heartbeat request (step S911 or the like) from the base stations 111 to 113 and the response to the request (step S912 or the like).

When the change to the secondary channel is requested in step S914, the intermediate entity 115 determines whether or not to change the frequency channels of the base stations 112 and 113 (step S915). Furthermore, in a case where the frequency channel is to be changed, the intermediate entity 115 determines a timing at which the change is possible and waits until the timing (step S916). In step S915, for example, a traffic situation, the maximum transmission power considered to be allowable in the secondary channel, and the like are determined as determination materials. In the drawing, it is assumed that the frequency channel is determined to be changed.

In a case where the frequency channel is to be changed, the intermediate entity 115 describes, in the request from the base stations 112 and 113, that the frequency channel is to be changed when relaying heartbeat requests (steps S917 and 919) from the base stations 111 to 113. Then, responses to these requests are returned (steps S918 and S920).

Furthermore, the communication control device 131 gives an instruction to stop the radio wave transmission and notification of the recommended operation parameters in responses to heartbeat requests (steps S921 and S923) from the base stations 111 to 113 (steps S922 and S924). Here, the recommended operation parameters include at least spectrum range information indicating the secondary channel and allowable maximum transmission power. The allowable maximum transmission power is determined by allocating an interference margin to each grant within a range of a headroom margin provided in the secondary channel.

The base stations 112 and 113 also stop the radio wave transmission, and the base stations 111 to 113 transmit heartbeat requests or grant requests for requesting the communication control device 131 for the new grants G1' to G3' in order to use the secondary channel (steps S925 and S927). The communication control device 131 returns responses to the requests (steps S926 and S928). These steps are repeated until the new grants G1' to G3' are acquired.

On the other hand, in a case where the frequency channel is not to be changed, the intermediate entity 115 does not describe that the frequency channel is to be changed in the heartbeat request in step S919. Alternatively, the intermediate entity 115 may describe that the change is not performed in the heartbeat request. Furthermore, the communication control device 131 does not give an instruction to stop the radio wave transmission in step S924, and the base stations 112 and 113 do not request new grants in step S927.

Furthermore, in a case where the frequency channel is not to be changed, the intermediate entity 115 may cause GAA grant requests in another frequency channel to be simultaneously performed. This is because the GAA enables use of other frequencies with larger transmission power while only one of the primary channel and the secondary channel can be used in the case of the PAL. In this case, the grant of GAA is requested in steps S925 and S927.

As illustrated in the drawing, Problem (2) that the wireless communication of the base stations 112 and 113 is unexpectedly interrupted can be solved by waiting without changing the frequency channel until an appropriate timing in step S916. Furthermore, Problem (3) that the base station 111 is isolated can be solved by simultaneously changing the frequency channels of all the base stations in steps S925 and S927 when the change is performed.

Note that it is also possible to adopt a configuration in which the respective base stations request new grants at different timings in a case where it is unnecessary to solve Problem (3).

In this manner, according to the first example in the embodiment of the present technology, the intermediate entity 115 determines whether or not to change the frequency channels of the base stations 112 and 113, and thus, it is possible to continue the radio wave transmission in the base stations in a case where the change is not necessary. Furthermore, in a case where the change is necessary, the intermediate entity 115 can perform the change at an appropriate timing to prevent the interruption of wireless communication at an unexpected timing. Therefore, the convenience of the communication system can be improved.

<Second Example>

Although the intermediate entity 115 determines whether or not to change the frequency channel in the above-described first example, the communication control device 131 (SAS) may determine whether or not to change the frequency channel instead of the intermediate entity 115. A second example is different from the first example in that the communication control device 131 (SAS) determines whether or not to change the frequency channel.

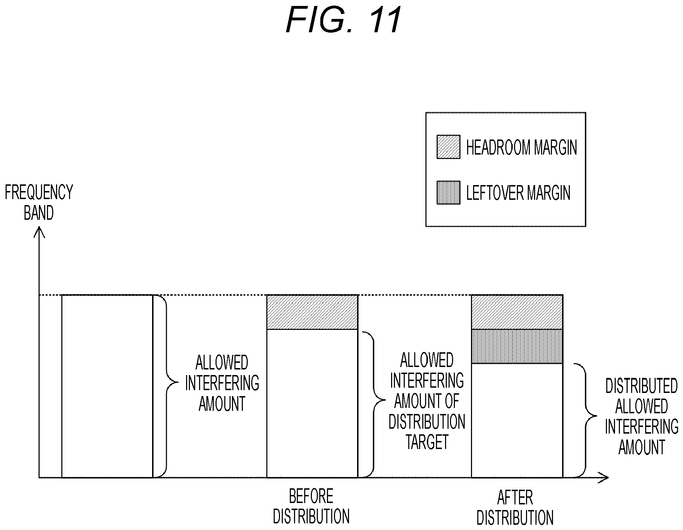

Fig. 11 is a diagram for describing an allowed interfering amount according to the embodiment of the present technology. Among the SAS's, processing called coordinated periodic activities among SAS's (CPAS) is periodically executed. In the CPAS, allowed interfering amount distribution processing (interference margin distribution) is performed with respect to each base station so as not to exceed an allowed interference amount of a protected entity.

At this time, a headroom margin (shaded portion) is provided for a maximum allowed interfering amount (white portion), and a remaining allowed interfering amount is allocated to a base station holding a grant. An allowed interfering amount corresponding to the headroom margin is allocated to a base station that newly acquires a grant in a period from the end of CPAS to the start of the next CPAS. A leftover margin (gray portion) that is remaining without being allocated at the time of CPAS is not used for that purpose. Therefore, it is not always possible to secure a sufficient amount of EIRP by the distribution of the headroom margin. In a case where sufficiently large EIRP cannot be secured, it is necessary to enable a larger EIRP to be permitted after the next CPAS. Such a problem occurs when a grant is issued on a channel as a change destination. This is a problem that can similarly occur in the first example as well.

Therefore, in the second example, means for continuously continuing the operation with sufficiently large transmission power even after DPA = ON will be described. The communication control device 131 (SAS) calculates in advance maximum transmission power considered to be allowable in the secondary channel at the time of CPAS or the like. Here, the communication control device 131 may determine whether or not to change all the base stations to the secondary channel on the basis of the allowable maximum transmission power in the secondary channel. The determination method will be described later.

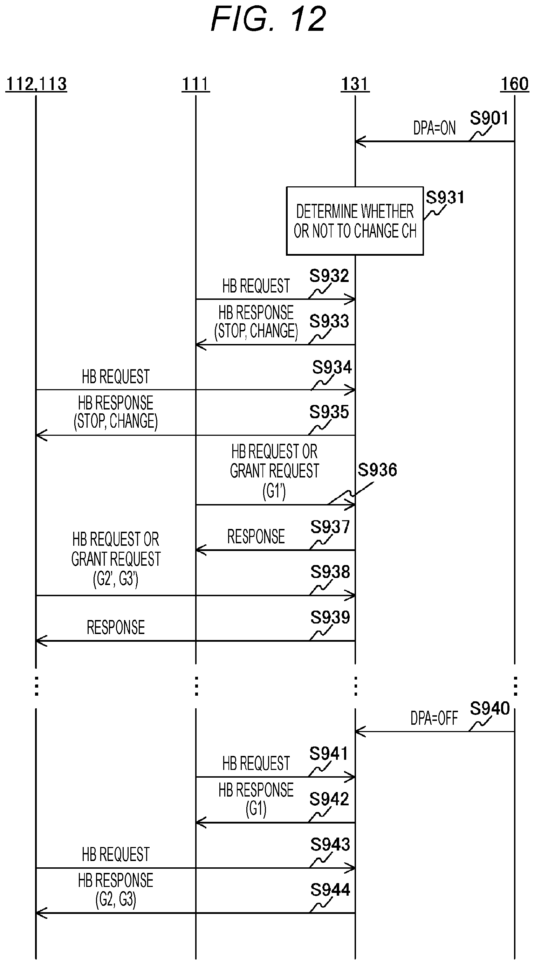

Fig. 12 is a sequence diagram illustrating an example of a frequency channel change process according to the second example of the embodiment of the present technology.

It is assumed that the ESC 160 notifies the communication control device 131 (SAS) of DPA = ON (step S901). The communication control device 131 determines whether or not to change the frequency channels of the base stations 112 and 113 together with the base station 111 (step S931). Furthermore, in a case where the frequency channel is to be changed, the communication control device 131 can determine a timing at which the change is possible and wait until the timing. In the drawing, it is assumed that the frequency channel is determined to be changed but waiting is not necessary. Note that, when the communication control device 131 waits, the radio wave transmission of the base station 111 is stopped before waiting.

The determination in step S931 may be performed as follows.

For example, the communication control device 131 compares the maximum transmission power allowed for the base stations 112 and 113 on the primary channel with the maximum transmission power allowed for those base stations on the secondary channel. In a case where the latter is equal to or larger than the former, or in a case where a difference therebetween is equal to or less than a certain allowed value, the communication control device 131 changes the channel to the secondary channel. Otherwise, the channel remains unchanged. In a case where there is a plurality of base stations, for example, the determination is made for each base station.

Even in a case where the maximum transmission power after the change is smaller than that before the change and the difference exceeds the allowed value, the communication control device 131 changes the channel to the secondary channel when a remaining time until the next CPAS becomes shorter than a predetermined time.

Alternatively, the communication control device 131 determines whether or not to change the frequency channel on the basis of the transmission power (such as EIRP) before the change, transmission power allowed for the base stations 112 and 113 within a margin after the change, and the transmission power allowed for the base stations at the time of the next CPAS. The maximum transmission power before the change will be denoted by EIRP0. Furthermore, the maximum transmission power allowed for the base stations 112 and 113 within the margin in the secondary channel will be denoted by EIRP1. The transmission power allowed for the base stations 112 and 113 in the next CPAS on the secondary channel will be denoted by EIRP2.

In a case where the remaining time until the next CPAS is longer than the predetermined time (one day or the like), the communication control device 131 compares EIRP0 and EIRP1 without considering EIRP2. In a case where EIRP1 is equal to or larger than EIRP0, or in a case where a difference therebetween is equal to or less than a certain allowed value, the communication control device 131 changes the channel to the secondary channel.

On the other hand, in a case where the remaining time to the next CPAS is equal to or less than the predetermined time, the communication control device 131 compares EIRP0 and EIRP2. In a case where EIRP2 is equal to or larger than EIRP0, or in a case where a difference therebetween is equal to or less than a certain allowed value, the communication control device 131 changes the channel to the secondary channel.

Note that the determination method described above can also be applied to the first example determined by the intermediate entity 115.

The communication control device 131 gives an instruction to stop the radio wave transmission and to perform the change to the secondary channel in responses to heartbeat requests (steps S932 and S934) from the base stations 111 to 113 (steps S933 and S935). At this time, the communication control device 131 also performs notification of recommended operation parameters for acquisition of a new grant.

Furthermore, in S933 and S935, the communication control device 131 does not delete but temporarily invalidates grant information before the change stored in the storage unit 213. For example, the communication control device 131 holds a valid flag indicating whether or not the grant information is valid for each grant information in the storage unit 213, and updates the valid flag to be invalid when the change is to be performed. Data in which the valid flag becomes invalid is not deleted from the storage unit 213, and can be read by updating the valid flag to be valid.

In a case where the grant information is invalidated, the communication control device 131 desirably deletes the information when a certain period of time elapses. For example, when the grant information has been invalidated, the communication control device 131 stores a holding time from the invalidation to deletion in the storage unit 213 in association with the grant information. For example, the time from the invalidation to the next CPAS is set as the holding time. Therefore, in a case where DPA = OFF is not set until the next CPAS, the grant information is deleted from the storage unit 213 and is not referred to thereafter.

The base stations 111 to 113 also transmit heartbeat requests or grant requests for requesting the communication control device 131 for new grants G1' to G3' in order to use the secondary channel (steps S936 and S938). The communication control device 131 returns responses to the requests (steps S937 and S939). These steps are repeated until the new grants G1' to G3' are acquired.

After the frequency channel is changed, the base station may also receive input data indicating whether or not its user (operator or the like) is satisfied with the operation on the secondary channel. The user enters the input data indicating satisfaction, for example, in a case where continuation on the secondary channel is desired or it is determined that there is no need to return to the primary channel. In the case of satisfaction, the base station can also request the communication control device 131 to delete (in other words, discard) the corresponding grant information by a heartbeat request. In this case, a request for discarding may be made by providing a new flag in a relinquishment request instead of the heartbeat request.

Then, it is assumed that the ESC 160 notifies the communication control device 131 (SAS) of DPA = OFF (step S940). At this time, the communication control device 131 returns the invalidated grant information to be valid and reads the grant information. On the basis of the grant information, the communication control device 131 gives the original grants in responses to heartbeat requests (steps S941 and S943) from the base stations 111 to 113 (steps S942 and S944). In steps S942 and S944, the grant information is notified as the recommended operation parameters. At this time, the communication control device 131 may permit an immediate start of the radio wave transmission in heartbeat responses after the grants are issued.

As illustrated in the drawing, in the second embodiment, since the communication control device 131 (SAS) determines whether or not to change the frequency channel in Solution (2), the configuration of Solution (3) in which the intermediate entity 115 notifies the SAS of the change timing is unnecessary.

In this manner, according to the second example of the embodiment of the present technology, the communication control device 131 (SAS) determines whether or not to change the frequency channel, and thus, it is not necessary for the intermediate entity 115 to notify the SAS of the change timing.

[Modification example]

In the second example described above, the communication control device 131 changes the frequency channels of the base station 111 to the secondary channel, but may also change the frequency channels to another frequency channel allocated to the GAA. This configuration corresponds to Solution (1). A modification example of the second example is different from the second example in that the communication control device 131 changes the frequency channel of the base station 111 to the frequency channel of the GAA.

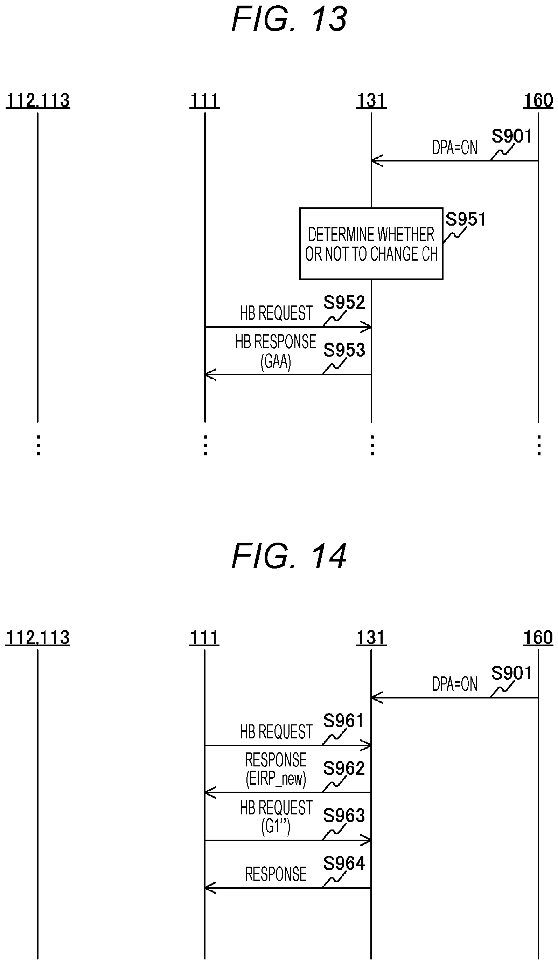

Fig. 13 is a sequence diagram illustrating an example of a frequency channel change process according to the modification example of the second example of the embodiment of the present technology.

It is assumed that the ESC 160 notifies the communication control device 131 (SAS) of DPA = ON (step S901). The communication control device 131 determines whether or not to change the frequency channels of the base stations 111 to 113 (step S951). Regarding the base station 111, there is a case where the available maximum transmission power is larger when the GAA operation is performed on still another frequency channel than that at the time of continuing the PAL operation using the secondary channel. In this case, the communication control device 131 determines to perform the change to the frequency channel of the GAA. In the modification example, a determination method regarding whether or not to change the frequency channels of the base stations 112 and 113 is similar to that in the second example.

In a case where the change to the frequency channel of the GAA is to be performed, the communication control device 131 gives an instruction to perform the change to the frequency channel of the GAA in a response to a heartbeat request (step S952) from the base station 111 (step S953).

In a case where it is determined to change the frequency channels also for the base stations 112 and 113, the communication control device 131 changes the frequency channels to the same frequency channel as that of the base station 111 according to a similar procedure similar to that in the second example.

In this manner, according to the modification example of the second example of the present technology, the communication control device 131 determines whether or not to change the frequency channels of the base stations 111 to 113 to a channel other than the secondary channel, and thus, the convenience of the communication system can be further improved.

< Third Example >

In the first and second examples described above, the radio wave transmission of the base station 111 whose grant is registered in the DPA Move List is stopped, but in this configuration, wireless communication of the base station 111 is interrupted. A third example of the embodiment is different from the first and second examples in that transmission power of the base station 111 is reduced and radio wave transmission is continued.

Fig. 14 is a sequence diagram illustrating an example of a frequency channel change process according to the third example of the embodiment of the present technology.

It is assumed that the ESC 160 notifies the communication control device 131 (SAS) of DPA = ON (step S901). The communication control device 131 performs notification of new transmission power EIRP_new in a response to a heartbeat request (step S961) from the base station 111 (step S962). Here, it is assumed that the transmission power EIRP_new is a value that is not registered in the DPA Move List and does not have the possibility of interference with radio waves of the wireless communication device 150 of the existing user if the transmission power is equal to or less than the value at the position of the base station 111.

The base station 111 transmits a heartbeat request for requesting the communication control device 131 to transmit a new grant G1'' using the primary channel with the transmission power being equal to or less than EIRP_new (step S963). The communication control device 131 returns a response to the request (step S964) .

A state where DPA = ON is extremely rare, and there is a circumstance that it is not known when it will come. Although there is a risk, it is possible to reduce EIRP of a grant only when DPA = ON as illustrated in the drawing for continuation of the use on the same frequency channel. Then, the operation is possible with EIRP larger than EIRP_new in most of the time (time when DPA = OFF) .

Furthermore, the base station 111 can continue the operation without suspension. The base stations 112 and 113 also do not need to change the frequency channels. The respective base stations do not need to transition to the secondary channel, and Problems (1) and (2) can be resolved.

Furthermore, even when DPA = ON, interference with the incumbent tier is allowed if EIRP_new is not included in the Move List by performing the CPAS calculation with the value thereof, and a base station that is not included in the Move List in another SAS is not newly included in the Move List even if the EIRP is changed after the CPAS. For this reason, there is no problem even if the grant is retaken with EIRP_new and authorized as illustrated in the drawing.

In this manner, according to the third example of the embodiment of the present technology, the communication control device 131 reduces the transmission power of the base station 111 when DPA = ON, and thus, the base station 111 can continue the radio wave transmission.

Note that the above-described embodiment illustrates an example for embodying the present technology, and matters in the embodiment and matters specifying the invention in the claims have correspondence relationships. Similarly, the matters specifying the invention in the claims and matters with the same names in the embodiment of the present technology have correspondence relationships, respectively. However, the present technology is not limited to the embodiment, and can be embodied by applying various modifications to the embodiment without departing from the gist of the present technology.

Furthermore, the procedures described in the above-described embodiment may be considered as a method including a series of procedures and may be considered as a program for allowing a computer to execute the series of procedures and a recording medium which stores the program. As this recording medium, for example, a compact disc (CD), a MiniDisc (MD), a digital versatile disc (DVD), a memory card, a Blu-ray (registered trademark) disc, and the like can be used.

Furthermore, the example of acquiring the radio wave detection information of the primary system using the ESC has been described in the first, second, and third examples of the embodiment of the present technology described above, but a method of acquiring information regarding the existence of the primary system in a predetermined area is not necessarily the ESC. For example, the existence of the primary system in the predetermined area may be acquired in a form that does not include sensing, such as incumbent-informing capability (IIC). The primary system may be a system that provides the information itself, may use a list or calendar information, or may be an automated system. In other words, information regarding the existence of a device that primarily uses the primary channel in the predetermined area may be provided to a database such as the SAS or a relay device directly or indirectly by the device that primarily uses the primary channel or a device that is a substitute for the device.

Furthermore, in the first, second, and third examples of the embodiment of the present technology so far, the first frequency channel may be a frequency channel allocated to the priority access tier, and the second frequency channel may be a frequency channel allocated to the general authorized access tier. Furthermore, in the first, second, and third examples of the embodiment of the present technology so far, the second frequency channel may be a frequency channel allocated to the priority access tier, and the first frequency channel may be a frequency channel allocated to the general authorized access tier.

The database such as the SAS or the relay device may include an acquisition unit that acquires information regarding the existence of the primary system in the predetermined area, the information being transmitted from the primary system. Note that an acquisition unit that acquires information regarding the existence of a device that acquires radio wave detection information such as ESC or a primary system transmitted from the primary system in a predetermined area may be included. Furthermore, the information regarding the existence of the primary system (a wireless communication device in the claims) in the predetermined area is not limited to information indicating the existence of the primary system in a predetermined range. The information described above may be a request for stopping the radio wave transmission of the first base station or the second base station due to the existence of the primary system in the predetermined range, or may be a request for changing the frequency channel of the first base station or the second base station due to the existence of the primary system in the predetermined range.

Note that effects described in the present specification are merely examples and are not limited, and other effects may be provided.

Note that the present technology may also have the following configurations.

(1) An information processing device including:

a communication unit that performs communication with a first base station of which a grant is registered in a list of grants for which transmission of a radio wave needs to be stopped in a case where a wireless communication device exists in a predetermined area and a second base station of which a grant is not registered in the list; and
a control unit that determines whether or not to change a frequency channel of the second base station from a first frequency channel to a second frequency channel when information regarding the existence of the wireless communication device in the predetermined area is acquired.

(2) The information processing device according to (1), the information processing device being a device that relays communication between a spectrum access system (SAS) and the first and second base stations.
(3) The information processing device according to (2), in which
in a case where the radio wave is detected, the control unit determines whether or not to change the frequency channel of the second base station when the SAS requests the second base station to change the frequency channel.
(4) The information processing device according to (2) or (3), in which
in a case of determining to change the frequency channel, the information processing device notifying the SAS that the frequency channel is to be changed and changing the frequency channel of the second base station at a predetermined timing.
(5) The information processing device according to (2), in which
the control unit determines whether or not to change the frequency channel of the second base station when the SAS requests the first base station to stop the radio wave transmission.
(6) The information processing device according to (1), the information processing device being a device having a function of a spectrum access system (SAS).
(7) The information processing device according to (6), further including

a storage unit that stores grant information of each of the first and second base stations,
in which the control unit temporarily invalidates the grant information in a case where the frequency channel is to be changed.

(8) The information processing device according to (6) or (7), in which
the control unit further determines whether or not to change a frequency channel of the first base station to a frequency channel allocated to a general authorized access tier.
(9) The information processing device according to any one of (1) to (8), in which
the information processing device changing a frequency channel of the first base station and the frequency channel of the second base station at a same timing in a case of determining to change the frequency channels.
(10) The information processing device according to any one of (1) to (8), in which
the information processing device changing a frequency channel of the first base station and the frequency channel of the second base station at different timings in a case of determining to change the frequency channels.
(11) The information processing device according to any one of (1) to (10), in which
the control unit changes the frequency channel of the second base station in a case where a difference between maximum transmission power allowed for the second base station in the first frequency channel and maximum transmission power allowed for the second base station in the second frequency channel does not exceed a predetermined allowed value.
(12) The information processing device according to (11), in which
the control unit changes the frequency channel of the second base station when a remaining time until next coordinated periodic activities among SAS's (CPAS) becomes shorter than a predetermined time in a case where the difference exceeds the allowed value.
(13) The information processing device according to any one of (1) to (12), in which

the control unit determines whether or not to change the frequency channel of the second base station on a basis of maximum transmission power allowed for the second base station in the first frequency channel, transmission power allowed for the second base station within a predetermined margin in the second frequency channel, and transmission power allowed for the second base station in next coordinated periodic activities among SAS's (CPAS) in the secondary frequency channel.

(14) The information processing device according to any one of (1) to (13), in which

the first frequency channel is a frequency channel allocated to a priority access tier, and the second frequency channel is a frequency channel allocated to a general authorized access tier.

(15) An information processing device including:

a communication unit that performs communication with a first base station of which a grant is registered in a list of grants for which radio wave transmission needs to be stopped in a case where a wireless communication device exists in a predetermined area; and

a control unit that controls transmission power of the base station to a value that is not registered in the list when information regarding the existence of the wireless communication device in the predetermined area is acquired.

(16) An information processing device including a communication unit that performs communication with a first information processing device,

in which the first information processing device performs communication with a first base station of which a grant is registered in a list of grants for which radio wave transmission needs to be stopped in a case where a wireless communication device exists in a predetermined area and a second base station of which a grant is not registered in the list, and determines whether or not to change a frequency channel of the second base station from a first frequency channel to a second frequency channel on a basis of information indicating that the wireless communication device exists in the predetermined area, and

the communication unit acquires determined information regarding the frequency channel of the second base station from the first information processing device.

(17) A communication system including:

a first base station of which a grant is registered in a list of grants for which radio wave transmission needs to be stopped in a case where a wireless communication device exists in a predetermined area;

a second base station of which a grant is not registered in the list;

a communication unit that performs communication with the first base station and the second base station;

an acquisition unit that acquires information regarding the existence of the wireless communication device in the predetermined area; and

a control unit that determines whether or not to change a frequency channel of the second base station from a first frequency channel to a second frequency channel on a basis of the information.

(18) An information processing method including:

a communication process of performing communication with a first base station of which a grant is registered in a list of grants for which radio wave transmission needs to be stopped in a case where a wireless communication device exists in a predetermined area and a second base station of which a grant is not registered in the list; and

a control process of determining whether or not to change a frequency channel of the second base station from a first frequency channel to a second frequency channel when information regarding the existence of the wireless communication device in the predetermined area is acquired.

(19) A program for causing a computer to execute:

a communication process of performing communication with a first base station of which a grant is registered in a list of grants for which radio wave transmission needs to be stopped in a case where a wireless communication device exists in a predetermined area and a second base station of which a grant is not registered in the list; and

a control process of determining whether or not to change a frequency channel of the second base station from a first frequency channel to a second frequency channel when information regarding the existence of the wireless communication device in the predetermined area is acquired.

REFERENCE SIGNS LIST

100 Communication network
105 Communication system
110, 110A, 110B Communication device
110C Intermediate device
111, 112, 113 Base station
115 Intermediate entity
120 Terminal
130, 130A, 130B, 131 Communication control device
150 Wireless communication device
160 ESC
211, 221 Communication unit
212, 222 Control unit
213, 223 Storage unit

**Claims**

1. An information processing device comprising:

   a communication unit that performs communication with a first base station of which a grant is registered in a list of grants for which radio wave transmission needs to be stopped in a case where a wireless communication device exists in a predetermined area and a second base station of which a grant is not registered in the list; and
   a control unit that determines whether or not to change a frequency channel of the second base station from a first frequency channel to a second frequency channel when information regarding the existence of the wireless communication device in the predetermined area is acquired.

2. The information processing device according to claim 1, the information processing device being a device that relays communication between a spectrum access system (SAS) and the first and second base stations.

3. The information processing device according to claim 2, wherein
   the control unit determines whether or not to change the frequency channel of the second base station when the SAS requests the second base station to change the frequency channel.

4. The information processing device according to claim 2, wherein
   in a case of determining to change the frequency channel, the information processing device notifying the SAS that the frequency channel is to be changed and changing the frequency channel of the second base station at a predetermined timing.

5. The information processing device according to claim 2, wherein
   the control unit determines whether or not to change the frequency channel of the second base station when the SAS requests the first base station to stop the radio wave transmission.

6. The information processing device according to claim 1, the information processing device being a device having a function of a spectrum access system (SAS).

7. The information processing device according to claim 6, further comprising

   a storage unit that stores grant information of each of the first and second base stations,
   wherein the control unit temporarily invalidates the grant information in a case where the frequency channel is to be changed.

8. The information processing device according to claim 6, wherein
   the control unit further determines whether or not to change a frequency channel of the first base station to a frequency channel allocated to a general authorized access tier.

9. The information processing device according to claim 1, wherein
   the information processing device changing a frequency channel of the first base station and the frequency channel of the second base station at a same timing in a case of determining to change the frequency channels.

10. The information processing device according to claim 1, wherein
    the information processing device changing a frequency channel of the first base station and the frequency channel of the second base station at different timings in a case of determining to change the frequency channels.

11. The information processing device according to claim 1, wherein
    the control unit changes the frequency channel of the second base station in a case where a difference between maximum transmission power allowed for the second base station in the first frequency channel and maximum transmission power allowed for the second base station in the second frequency channel does not exceed a predetermined allowed value.

12. The information processing device according to claim 11, wherein
    the control unit changes the frequency channel of the second base station when a remaining time until next coordinated periodic activities among SAS's (CPAS) becomes shorter than a predetermined time in a case where the difference exceeds the allowed value.

13. The information processing device according to claim 1, wherein
    the control unit determines whether or not to change the frequency channel of the second base station on a basis of maximum transmission power allowed for the second base station in the first frequency channel, transmission power allowed for the second base station within a predetermined margin in the second frequency channel, and transmission power allowed for the second base station in next coordinated periodic activities among SAS's (CPAS) in the secondary channel.

14. The information processing device according to claim 1, wherein
    the first frequency channel is a frequency channel allocated to a priority access tier, and the second frequency channel is a frequency channel allocated to a general authorized access tier.

15. An information processing device comprising:

    a communication unit that performs communication with a first base station of which a grant is registered in a list of grants for which radio wave transmission needs to be stopped in a case where a wireless communication device exists in a predetermined area; and
    a control unit that controls transmission power of the base station to a value that is not registered in the list when information regarding the existence of the wireless communication device in the predetermined area is acquired.

16. An information processing device comprising a communication unit that performs communication with a first information processing device,

    wherein the first information processing device performs communication with a first base station of which a grant is registered in a list of grants for which radio wave transmission needs to be stopped in a case where a wireless communication device exists in a predetermined area and a second base station of which a grant is not registered in the list, and determines whether or not to change a frequency channel of the second base station from a first frequency channel to a second frequency channel on a basis of information indicating that the wireless communication device exists in the predetermined area, and
    the communication unit acquires determined information regarding the frequency channel of the second base station from the first information processing device.

17. A communication system comprising:

    a first base station of which a grant is registered in a list of grants for which radio wave transmission needs to be stopped in a case where a wireless communication device exists in a predetermined area;
    a second base station of which a grant is not registered in the list;
    a communication unit that performs communication with the first base station and the second base station;
    an acquisition unit that acquires information regarding the existence of the wireless communication device in the predetermined area; and

a control unit that determines whether or not to change a frequency channel of the second base station from a first frequency channel to a second frequency channel on a basis of the information.

18. An information processing method comprising:

a communication process of performing communication with a first base station of which a grant is registered in a list of grants for which radio wave transmission needs to be stopped in a case where a wireless communication device exists in a predetermined area and a second base station of which a grant is not registered in the list; and

a control process of determining whether or not to change a frequency channel of the second base station from a first frequency channel to a second frequency channel when information regarding the existence of the wireless communication device in the predetermined area is acquired.

19. A program for causing a computer to execute:

a communication process of performing communication with a first base station of which a grant is registered in a list of grants for which radio wave transmission needs to be stopped in a case where a wireless communication device exists in a predetermined area and a second base station of which a grant is not registered in the list; and

a control process of determining whether or not to change a frequency channel of the second base station from a first frequency channel to a second frequency channel when information regarding the existence of the wireless communication device in the predetermined area is acquired.

# FIG. 1

# FIG. 2

# FIG. 3

## FIG. 4

(MASTER)

130A

110C

(SLAVE)

110A

110A

110A

(SLAVE)

# FIG. 5

INCUMBENT TIER
(Incumbent Tier)

PRIORITY ACCESS TIER
(Priority Access Tier)

GENERAL AUTHORIZED ACCESS TIER
(General Authorized Access Tier)

# FIG. 6

120        120        110        130

CALCULATE COMMUNICATION PARAMETER THAT NEEDS TO BE USED BY COMMUNICATION DEVICE OF SECONDARY SYSTEM

ACQUIRE COMMUNICATION PARAMETER THAT NEEDS TO BE USED BY COMMUNICATION DEVICES (BASE STATION AND TERMINAL) OF SECONDARY SYSTEM

NOTIFY COMMUNICATION DEVICE OF SECONDARY SYSTEM OF COMMUNICATION PARAMETER

SET COMMUNICATION PARAMETER THAT NEEDS TO BE USED BY OWN COMMUNICATION DEVICE (BASE STATION)

PERFORM NOTIFICATION OF COMMUNICATION PARAMETER THAT NEEDS TO BE USED BY COMMUNICATION DEVICE (TERMINAL) SUBORDINATE TO OWN COMMUNICATION DEVICE (BASE STATION)

ACQUIRE COMMUNICATION PARAMETER THAT NEEDS TO BE USED BY COMMUNICATION DEVICE (TERMINAL) OF SECONDARY SYSTEM

ACQUIRE COMMUNICATION PARAMETER THAT NEEDS TO BE USED BY COMMUNICATION DEVICE (TERMINAL) OF SECONDARY SYSTEM

SET COMMUNICATION PARAMETER THAT NEEDS TO BE USED BY COMMUNICATION DEVICE (TERMINAL) OF SECONDARY SYSTEM

SET COMMUNICATION PARAMETER THAT NEEDS TO BE USED BY COMMUNICATION DEVICE (TERMINAL) OF SECONDARY SYSTEM

PERFORM COMMUNICATION WITH ANOTHER COMMUNICATION DEVICE (TERMINAL) OF SECONDARY SYSTEM

PERFORM COMMUNICATION WITH ANOTHER COMMUNICATION DEVICE (TERMINAL) OF SECONDARY SYSTEM

# FIG. 7

# FIG. 8

a

b

# FIG. 9

| 112,113 | 111 | 131 | 160 |
|---|---|---|---|

DPA=ON — S901

HB REQUEST — S902

HB RESPONSE (STOP, CHANGE) — S903

HB REQUEST (STOP, CHANGE) — S904

HB RESPONSE — S905

HB REQUEST OR GRANT REQUEST (G1') — S906

RESPONSE — S907

HB REQUEST OR GRANT REQUEST (G2', G3') — S908

RESPONSE — S909

# FIG. 10

# FIG. 11

HEADROOM MARGIN

LEFTOVER MARGIN

FREQUENCY
BAND

ALLOWED
INTERFERING
AMOUNT

ALLOWED
INTERFERING
AMOUNT OF
DISTRIBUTION
TARGET

DISTRIBUTED
ALLOWED
INTERFERING
AMOUNT

BEFORE
DISTRIBUTION

AFTER
DISTRIBUTION

# FIG. 12

# FIG. 13

112,113　　　111　　　131　　　160

DPA=ON　S901

DETERMINE WHETHER
OR NOT TO CHANGE CH　S951

HB REQUEST　S952

HB RESPONSE
(GAA)　S953

# FIG. 14

112,113　　　111　　　131　　　160

DPA=ON　S901

HB REQUEST　S961

RESPONSE
(EIRP_new)　S962

HB REQUEST
(G1")　S963

RESPONSE　S964

## INTERNATIONAL SEARCH REPORT

| | International application No. |
|---|---|
| | **PCT/JP2022/003525** |

| A. | CLASSIFICATION OF SUBJECT MATTER |
|---|---|

*H04W 16/14*(2009.01)i; *H04W 72/04*(2009.01)i; *H04W 72/10*(2009.01)i
FI:    H04W16/14; H04W72/10; H04W72/04 132

According to International Patent Classification (IPC) or to both national classification and IPC

| B. | FIELDS SEARCHED |
|---|---|

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020/195145 A1 (SONY CORPORATION) 01 October 2020 (2020-10-01) paragraphs [0015]-[0026], [0137], [0171]-[0173], [0180] | 1-14, 16-19 |
| X | paragraphs [0172]-[0173] | 15 |
| Y | Requirements for Commercial Operation in the U.S. 3550-3700 MHz Citizens Broadband Radio Service Band. WINNF-TS-0112. V1.9.1. 11 March 2020, pp. 3, 41-42 pp. 3, 41-42 | 1-14, 16-19 |
| Y | WO 2020/230659 A1 (SONY CORPORATION) 19 November 2020 (2020-11-19) paragraphs [0291], [0293], [0378] | 11-13 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/003525**

| Box No. III     Observations where unity of invention is lacking (Continuation of item 3 of first sheet) |
|---|

This International Searching Authority found multiple inventions in this international application, as follows:

Document 1: WO 2020/195145 A1 (SONY CORPORATION) 01 October 2020 (2020-10-01) paragraphs [0015]-[0026], [0137], [0171]-[0173], [0180] (Family: none)

    Claims are classified into two inventions below.

(Invention 1) Claims 1-14, 16-19
    Claims 1-14 and 16-19 have the special technical feature in which an "information processing device performs communication with a first base station in which grant is registered in a list of grant for stopping radio transmission in a case where a wireless communication device is present in a predetermined area and a second base station in which the grant is not registered in the list, and determines whether to change a frequency channel of the second base station from a first frequency channel to a second frequency channel when information regarding that the wireless communication device is present in a predetermined area is acquired," and are thus classified as invention 1.

(Invention 2) Claim 15
    Claim 15 shares, with claim 1 classified as invention 1, the common technical feature in which an "information processing device performs communication with a first base station in which grant is registered in a list of grant for stopping radio transmission in a case where a wireless communication device is present in a predetermined area, and information regarding that the wireless communication device is present in a predetermined area is acquired." However, said technical feature does not make a contribution over the prior art in light of the disclosure of document 1 (particularly, refer to paragraphs [0172]-[0173]) and thus cannot be said to be a special technical feature. There are no other same or corresponding special technical features between claim 15 and claim 1.
    Claim 15 is not dependent on claim 1. Claim 15 is not substantially identical to or similarly closely related to any of the claims classified as invention 1.
    Therefore, claim 15 cannot be classified as invention 1.
    Claim 15 has the special technical feature in which an "information processing device performs communication with a first base station in which grant is registered in a list of grant for stopping radio transmission in a case where a wireless communication device is present in a predetermined area, and controls transmission power of the base station to be a value which is not registered in the list when information regarding that the wireless communication device is present in a predetermined area is acquired," and is thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
    ☐ The additional search fees were accompanied by the applicant's protest and, where applicable, the payment of a protest fee.
    ☐ The additional search fees were accompanied by the applicant's protest but the applicable protest fee was not paid within the time limit specified in the invitation.
    ☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/003525**

| Patent document cited in search report | | | Publication date (day/month/year) | Patent family member(s) | Publication date (day/month/year) |
|---|---|---|---|---|---|
| WO | 2020/195145 | A1 | 01 October 2020 | (Family: none) | |
| WO | 2020/230659 | A1 | 19 November 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- WINNF-TS-0112. The Software Defined Radio Forum Inc, 30 February 2021